# EUROPÄISCHE PATENTSCHRIFT

(11) **EP 2 932 440 B1**
(45) Veröffentlichungstag und Bekanntmachung des Hinweises auf die Patenterteilung: **15.04.2020**
(21) Anmeldenummer: 13811158.8
(22) Anmeldetag: 13.12.2013
(51) Int. Cl.: G06K 19/077

(54) **VERFAHREN UND VORRICHTUNG ZUR HERSTELLUNG EINES WERT- UND/ODER SICHERHEITSDOKUMENTS MIT EINER DATENÜBERTRAGUNGSEINRICHTUNG**
METHOD AND DEVICE FOR PRODUCING A VALUE DOCUMENT AND/OR A SECURITY DOCUMENT HAVING A DATA TRANSMISSION DEVICE
PROCÉDÉ ET DISPOSITIF POUR FABRIQUER UN DOCUMENT DE VALEUR ET/OU DE SÉCURITÉ COMPRENANT UN DISPOSITIF DE TRANSMISSION DE DONNÉES

(30) Priorität: 17.12.2012 DE 102012223471
(43) Veröffentlichungstag der Anmeldung: 21.10.2015
(73) Patentinhaber: Bundesdruckerei GmbH, 10969 Berlin (DE)
(72) Erfinder: FERBER, Alexander, 12105 Berlin (DE); MUTH, Oliver, 12277 Berlin (DE); KLOESER, Joachim, 10779 Berlin (DE)
(74) Vertreter: Ramrath, Lukas
(86) Internationale Anmeldenummer: PCT/EP2013/076505
(87) Internationale Veröffentlichungsnummer: WO 2014/095612

(56) Entgegenhaltungen:
- EP-A1- 1 742 171
- DE-A1-102008 063 706
- US-A1- 2005 284 917

## Beschreibung

Die Erfindung betrifft ein Verfahren und eine Vorrichtung zur Herstellung eines Wert- und/oder Sicherheitsdokuments mit einer Datenübertragungseinrichtung.

Es sind bereits Wert- und/oder Sicherheitsdokumente bekannt, die eine kontaktlose Datenübertragungseinrichtung beinhalten. Zur Datenspeicherung und/oder Datenverarbeitung werden bereits seit längerer Zeit elektronische Bauelemente in das Dokument integriert, mit denen Daten gespeichert und/oder verarbeitet werden können.

Aus dem Stand der Technik sind hierbei Sicherheitsdokumente bekannt, die ein so genanntes Inlay oder eine so genannte Inlay-Lage beinhalten. Ein Inlay kann hierbei eine Trägerlage, z.B. eine als Trägerfolie ausgebildete Trägerlage, umfassen, die mit aktiven und passiven elektrischen oder elektronischen Bauelementen bestückt wird. Die WO 2011/003518 A1 beschreibt ein Verfahren zur Herstellung eines Inlays für einen Folienverbund, insbesondere ein Inlay für die Weiterverarbeitung zu einem Wert- oder Sicherheitsdokument, bei dem eine Trägerfolie mit mehreren darauf angeordneten und einander zugeordneten elektronischen Bauelementen einer Bilderfassungseinrichtung zugeführt wird, durch welche zumindest die Position von einem elektronischen Bauelement als Nutzen erfasst wird. Weiter wird eine auf die Trägerfolie aufzubringende lasersensitive Ausgleichsfolie zunächst einer Laserschneideinrichtung zugeführt. Weiter werden die Ausgleichsfolie mit den daran eingebrachten Aussparungen und das Trägermaterial in einer Zusammenführstation zusammengeführt und passergenau zueinander ausgerichtet zu einem Inlay fixiert. Hierbei wird mit der Laserschneideinrichtung zur Herstellung der Aussparungen, mit einer weiteren Laserschneideinrichtung oder mit einer Markierungseinrichtung für jeden Nutzen oder eine Gruppe von Nutzen eine Steuermarke auf die Ausgleichsfolie in Abhängigkeit von der jeweiligen erfassten Position des elektronischen Bauelements auf der Trägerfolie aufgebracht.

Aus DE 10 2010 028 444 A1 geht ein Dokument mit einem Chip und einer Antenne zur induktiven Einkopplung von Energie hervor. Die Antenne dieses Dokuments weist eine äußere Windung, zumindest eine mittlere Windung und eine innere Windung auf, wobei die mittlere Windung zwischen der äußeren und der inneren Windung angeordnet ist und der Chip mit der äußeren und der inneren Windung in elektrischem Kontakt steht. Die mittlere Windung überbrückt den Chip in einem Überbrückungsbereich der Antenne. Die Antenne ist spiralförmig ausgebildet. Der Chip ist in Flip-Chip-Technik über den Antennenwindungen montiert. Die Antennenwindungen können im Chipbereich eine geringere Breite aufweisen als im übrigen Bereich der Windungen.

Die DE 10 2008 063 706 A1 offenbart eine Vorrichtung zur kontaktlosen Personalisierung einer SIM-Karte, bestehend aus einer Trägerkarte, in deren Innenbereich die SIM-Karte über einen Materialverbund mit dem Material der Trägerkarte verbunden ist und einer Antenne, deren Anschlussdrähte mit den Anschlüssen des Chips der SIM-Karte verbunden sind.

Die US 2005/284917 A1 offenbart ein Verfahren und eine Vorrichtung zum Verkleben integrierter Schaltungen. Die Druckschrift offenbart eine Photostation zum Erfassen einer Lage eines Chips.
Bei der Herstellung eines Wert- und/oder Sicherheitsdokuments, welches eine Datenübertragungseinrichtung enthält, wird ein elektronisches Bauelement in einer gewünschten Position und/oder Orientierung zur Antennenstruktur platziert, so dass Kontaktstellen des elektronischen Bauelements die Antennenstruktur kontaktieren können. Die Genauigkeit der Positionierung und Kontaktierung ist hierbei entscheidend für die spätere Funktionsfähigkeit des Wert- und/oder Sicherheitsdokuments.

Problematisch ist, dass die Beurteilung oder Kontrolle einer Qualität oder Genauigkeit der Positionierung des elektronischen Bauelements relativ zur Antennenstruktur im Herstellungsprozess des Wert- und/oder Sicherheitsdokuments schwierig und zeitaufwändig ist.

Es stellt sich das technische Problem, ein Verfahren und eine Vorrichtung zur Herstellung eines Wert- und/oder Sicherheitsdokuments mit einer Datenübertragungseinrichtung zu schaffen, wobei ein aufgrund einer ungenügend genauen Positionierung des elektronischen Bauelements relativ zur Antennenstruktur gebildeter Ausschuss im Herstellungsprozess, insbesondere auch in nachfolgenden Prozessschritten, vermindert wird.

Vorgeschlagen wird ein Verfahren zur Herstellung eines Wert- und/oder Sicherheitsdokuments mit einer Datenübertragungseinrichtung. Die Datenübertragungseinrichtung des Wert- und/oder Sicherheitsdokuments umfasst hierbei mindestens eine Antennenstruktur und mindestens ein elektronisches Bauelement.

Das Wert- und/oder Sicherheitsdokuments kann beispielsweise als Smartcard oder Identifikationsdokument ausgebildet sein. Beispielsweise kann das Dokument ein Personalausweis, Reisepass, Zugangsausweis, Führerschein, Fahrzeugbrief, Fahrzeugschein, Firmenausweis, Mitgliedsausweis, Skipass oder ein sonstiger Berechtigungsausweis, ein Ticket im öffentlichen Personen-Nahverkehr, eine Banknote, Kreditkarte, Scheckkarte, Barzahlungskarte, Eintrittskarte, Bonuskarte, Identifikationskarte, ein Visum oder dergleichen sein. Das Dokument kann in Form einer Karte mit einer Vorderseite und einer Rückseite vorliegen oder als buchartiges Dokument ausgebildet sein. Es kann im Wesentlichen aus Papier oder auch aus Kunststoff hergestellt sein. Im Falle eines Personalausweises trägt dessen Vorderseite zum Beispiel das Lichtbild sowie den Namen des Inhabers. Die Rückseite kann weitere Angaben enthalten, beispielsweise die Anschrift des Inhabers. Das Dokument kann als Transponder, insbesondere als passiver Transponder, beispielsweise als RFID-Sicherheitsdokument, ausgebildet sein.

Das Wert- und/oder Sicherheitsdokument kann hierbei eine kontaktlose Datenübertragungseinrichtung beinhalten. Diese kontaktlose Datenübertragungseinrichtung weist hierbei die mindestens eine Antennenstruktur und das elektronische Bauelement auf, welches elektrisch mit der Antennenstruktur verbunden ist.

Es ist eine Grundidee der Erfindung, nach der Aufbringung eines elektronischen Bauelements auf einen Trägerkörper des Wert- und/oder Sicherheitsdokuments ein Durchleuchtungsbild zu erzeugen, wobei bildbasiert eine relative Lage und/oder Orientierung einer Antennenstruktur zu dem aufgebrachten elektronischen Bauelement ermittelt und ein entsprechendes Qualitätskriterium ausgewertet wird.

Das Verfahren umfasst folgende Verfahrensschritte:

### 1. Bereitstellen eines Trägerkörpers,

Der Trägerkörper kann z.B. als Kunststofflage ausgebildet sein. Insbesondere kann der Trägerkörper ein elektrisch isolierender Trägerkörper sein.

Die Kunststofflage bzw. mehrere oder alle Lagen des Dokuments kann/können aus einem Polymer, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier, hergestellt werden. Außerdem kann das Dokument oder die Kunststofflage auch aus mehreren dieser Materialien hergestellt sein. Bevorzugt besteht die Kunststofflage oder das Dokument aus PC oder PC/TPU/PC. Die Polymere können entweder ungefüllt oder gefüllt vorliegen. Im ersten Fall (ungefüllt) sind sie vorzugsweise transparent oder transluzent. Falls die Polymere gefüllt sind, sind sie opak. Das Füllmaterial kann beispielsweise ein Pigment sein oder ein Füllmaterial, das eine besonders hohe oder eine besonders niedrige Dielektrizitätskonstante aufweist. Durch eine geeignete Wahl des Füllmaterials können die elektrischen Eigenschaften des Schaltkreiselements beeinflusst werden. Bevorzugt wird das Dokument aus 3 bis 12, vorzugsweise 4 bis 10 Kunststofflagen (einschließlich des Trägerkörpers der Datenübertragungseinrichtung), die z. B. als Folien ausgebildet sind, hergestellt.

Ein die Kunststofflage enthaltendes Dokument kann aus diesen Materialien insbesondere durch Lamination hergestellt werden. Typischerweise wird die Lamination von PC in einer Laminierpresse bei 170 bis 200 °C und einem Druck von 50 bis 600 N/cm² hergestellt.

### 2. Aufbringen einer Antennenstruktur auf den Trägerkörper,

Die Antennenstruktur kann z. B. als ein auf dem Trägerkörper angeordnetes Schaltkreiselement ausgebildet sein, das einen durchgehenden Antennen-Leiterzug in Form mindestens einer Spiralwindung, beispielsweise von einer, zwei, drei, vier, fünf, sechs, sieben, acht oder noch mehr Spiralwindungen, und jeweils einen Anschlusskontakt zur elektrischen Kontaktierung eines elektronischen Bauelements aufweist. Das Schaltkreiselement dient zur induktiven Einkopplung von Energie, die von einem Schreib-/Lesegerät erzeugt wird. Anschlusskontakte können hierbei an den Enden des Antennen-Leiterzuges angeordnet sein. Es ist jedoch auch möglich, dass ein Anschlusskontakt entlang eines Verlaufs des Antennen-Leiterzuges und somit nicht am Ende des Antennen-Leiterzuges angeordnet ist, insbesondere wenn der Antennen-Leiterzug einen Blindleiterzug aufweist.

Die Antennenstruktur, insbesondere eine als Leiterzug ausgebildete Antennenstruktur, weist, insbesondere an dessen Enden, jeweils einen Anschlussbereich oder Anschlusskontakt auf, der im Montagebereich zur elektrischen Kontaktierung mit dem elektronischen Bauelement dient. Die Anschlusskontakte können aus demselben Material und mit derselben Verfahrenstechnik hergestellt sein wie die Antennenstruktur.

Das Aufbringen der Antennenstruktur kann durch Aufdrucken auf den Trägerkörper erfolgen, beispielsweise mittels Siebdruck, Tiefdruck oder Flexodruck, insbesondere auch einschließlich der Anschlussbereiche der Antennenstruktur. Die genannten Druckverfahren zeichnen sich hierbei durch einen verhältnismäßig hohen Farbauftrag aus. Hierdurch werden gedruckte Antennen mit einer vergleichsweise hohen Güte aufgrund eines vergleichsweise geringen elektrischen Widerstandes erreicht. Tiefdruck kann insbesondere in den Formen Stichtiefdruck oder Rastertiefdruck erfolgen. Siebdruck in Form von Bogensiebdruck oder Rundsiebdruck ist das bevorzugte Druckverfahren.

Wenn die Antennenstruktur mit einer Leitpaste oder einem Leitlack gebildet ist, kann der elektrische Widerstand der Antennenstruktur durch eine nachträgliche Kompression erniedrigt werden, etwa im Montagebereich des Chips. Dies kann insbesondere durch Ausüben eines Druckes mittels eines Stempels auf die Antennenstruktur erreicht werden.

Die Antennenstruktur ist vorzugsweise in einer Ebene des Dokuments gebildet, indem es auf dem Trägerkörper erzeugt ist. Dadurch kann das Schaltkreiselement in einem Arbeitsgang erzeugt werden.

Insbesondere kann die Antennenstruktur aus einer Leitpaste oder einem Leitlack hergestellt werden. Diese Technik ist einfach und damit kostengünstig realisierbar. Die Leitpaste oder der Leitlack enthält mindestens ein Polymer als Binder sowie mindestens ein Metall und/oder ein leitfähiges Metalloxid und/oder anderes leitfähiges Material in dem Polymer. Als leitfähiges Material kommen Kupfer, Silber, Gold, Eisen, Zink, Zinn oder Kohlenstoff, insbesondere Graphit, Singlewall- und/oder Multiwall-Nanotubes, Fullerene oder Graphene in Betracht. Als Metalloxide kommen ITO (Indium-Zinn-Oxid), IZO, FTO (Fluor-dotiertes Zinndioxid), ATO (Antimonoxid) in Betracht. Die Metalle/Metalloxide können in Form von Flakes, Nadeln, Pulver (insbesondere nanoskalig), Plättchen oder dergleichen vorliegen. Insbesondere liegen diese als aggregierte Partikel vor. Als ein anderes leitfähiges Material kommen leitfähige organische Materialien/Polymere, z.B. Polyanilin, PEDOT:PSS, in Betracht. Zur Erzeugung der Antennenstruktur mit der Leitpaste oder dem Leitlack kann eine Siebdrucktechnik eingesetzt werden, beispielsweise Bogendruck, oder ein Rolle-Rolle-Druckverfahren. Die Dicke der aufgedruckten Paste oder des Lacks kann insbesonderel µm bis 100 µm und besonders bevorzugt etwa 10 µm betragen. Die Leitpaste oder der Leitlack kann entweder einfach getrocknet werden oder mittels Wärme und/oder Bestrahlung mit elektromagnetischer Strahlung, beispielsweise UV-Strahlung, aushärtbar sein.

Verwendet werden können auch die Druckverfahren des Tiefdrucks, insbesondere Stichtiefdruck, auch Intaglio genannt, sowie Rastertiefdruck, Flachdruck, insbesondere Offset, Hochdruck, insbesondere Letterset, Durchdruck, insbesondere Siebdruck, Flexodruck oder Digitaldruckverfahren, insbesondere Inkjet. Bevorzugt sind Siebdruck, Tiefdruck sowie Flexodruck, besonders bevorzugt Siebdruck.

Alternativ kann die Antennenstruktur auch in einer anderen Technik hergestellt sein, beispielweise in einer Ätztechnik aus Aluminium oder Kupfer mittels eines Ätzresists oder in einem Pattern-Plating-Verfahren. Bei Pattern-Plating-Verfahren werden, ausgehend von einer Grundmetallisierung, beispielsweise aus Kupfer, mit einem Platingresist auf der Grundmetallisierung zunächst die Strukturen als Kanäle geformt. Dann wird zusätzliches Metall in den Kanälen galvanotechnisch abgeschieden. Nach dem Entfernen des Platingresists wird die Grundmetallisierung zwischen den Strukturen durch Ätzen entfernt. Beispielsweise kann das Wert- und/oder Sicherheitsdokument mindestens zwei miteinander durch Laminieren verbundene Kunststofflagen aufweisen, wobei eine der Lagen eine kontaktlose Datenübertragungseinrichtung mit der Antennenstruktur bildet oder beinhaltet. Der Trägerkörper, insbesondere ein elektrisch isolierender Trägerkörper, der Datenübertragungseinrichtung kann ebenfalls aus Kunststoff hergestellt sein. Alternativ kann das Dokument auch durch Vergießen der elektronischen Komponenten (kontaktlose Datenübertragungseinrichtung mit Chip, Antenne) in Kunststoff hergestellt sein.

### 3. Aufbringen eines elektronischen Bauelements auf den Trägerkörper. Das elektronische Bauelement kann in einem Montagebereich über oder unter einem Abschnitt der Antennenstruktur angeordnet werden.

Hierbei werden unter einem elektronischen Bauelement insbesondere Halbleiterchips verstanden, insbesondere solche, welche zur Speicherung und Verarbeitung von Daten geeignet sind. Insbesondere können die elektronischen Bauelemente elektronische Halbleiterschaltungselemente sein. Die elektronischen Bauelemente umfassen insbesondere sogenannte RFID Chips, welche zur kontaktlosen Kommunikation geeignet sind. RFID-Chips können vergleichsweise einfach z.B. nur eine Seriennummer enthalten und diese bei Aktivierung kontaktlos übermitteln oder es kann sich um Speicherchips mit Verschlüsselung handeln, wie diese zum Beispiel in elektronischen Reisedokumenten eingesetzt werden. Zur Datenkommunikation mit externen Geräten kann beispielsweise eine Kontaktfeldmatrix mit mehreren Kontaktfeldern gemäß ISO 7816 dienen, die mit dem Chip verbunden sind und die beim Verwenden des Dokuments, beispielsweise einer Karte, über Ein- und Ausgabegeräte einen elektrischen Kontakt zu externen Datenquellen und -speichern herstellen. Gemäß einer Weiterentwicklung von derartigen Wert- und/oder Sicherheitsdokumenten stehen auch kontaktlose Dokumente zur Verfügung, die ebenfalls elektronische Bauelemente zur Datenspeicherung und -verarbeitung enthalten und die über Ein- und Ausgabegeräte für den Datenaustausch mit externen Datenquellen zusätzlich über eine Antenne verfügen. Daten werden in diesem Falle mittels eines Schreib-/Lesegerätes mit den Bauelementen in dem Dokument dadurch ausgetauscht, dass das Schreib-/Lesegerät ein elektromagnetisches Wechselfeld mit einer Trägerfrequenz typischerweise im Radiowellenbereich erzeugt, das von der Antenne im Dokument detektiert und in elektrische Signale umgewandelt wird, die an das Bauelement weitergeleitet werden. Zur Ausgabe von von dem Dokument ausgehenden Daten erzeugt die Antenne ein entsprechendes elektromagnetisches Wechselfeld, das von dem Schreib-/Lesegerät detektiert wird. Derartige Transponder oder RFID-(radio frequency identification) Systeme sind ebenfalls seit einiger Zeit bekannt. Eine kontaktlose Kommunikation kann beispielsweise gemäß ISO 14443 erfolgen.

Das elektronische Bauelement, insbesondere das Halbleiterschaltungselement, kann auch als Chip bezeichnet werden. Dieses Element wird als Datenverarbeitungssystem in dem Dokument eingesetzt, das beispielsweise eine kryptografischer Funktion zur Signierung und/oder Authentifizierung, eine Bezahlfunktion oder eine andere Funktion zur Durchführung einer Finanztransaktion oder eine Ausweisfunktion, insbesondere mit Bildwiedergabe auf einer Anzeigevorrichtung, aufweist.

Das elektronische Bauelement und die Antennenstruktur sind vorzugsweise parallel zur Vorder- und Rückseite des Wert- und/oder Sicherheitsdokuments angeordnet, in das die kontaktlose Datenübertragungseinrichtung integriert ist. Der Trägerkörper kann als Dokumentenlage in das Dokument integrierbar sein. Zusätzlich zu dem Trägerkörper kann ferner eine Ausgleichslage vorgesehen werden, die auf der Seite des Trägerkörpers angeordnet ist, auf der sich auch das elektronische Bauelement befindet, und die eine Aussparung zur Aufnahme des Bauelements aufweist. Die Dicke der Ausgleichslage entspricht vorzugsweise ungefähr der Montagehöhe des Bauelements.

Das elektronische Bauelement kann zwei Kontaktstellen aufweisen und in seinem jeweiligen Montagebereich über z. B. der vorhergehend erwähnten mindestens einen Spiralwindung platziert sein, wobei die mindestens zwei Kontaktstellen des Bauelements mit jeweils einem Anschlusskontakt der Antennenstruktur elektrisch verbunden sind. Es ist z. B. möglich, dass sich mindestens eine Spiralwindung des Antennen-Leiterzuges außerhalb des Montagebereiches in mindestens zwei, beispielsweise zwei, drei oder vier, Spiralwindungsäste verzweigt und zwar zwischen jeweils zwei Verzweigungsstellen einer Spiralwindung. Im Verlauf einer Spiralwindung verzweigt sich diese an einer ersten Verzweigungsstelle beispielsweise in zwei Spiralwindungsäste, und an einer zweiten Verzweigungsstelle werden diese Äste unter Bildung einer einspurigen Spiralwindung wieder zusammengeführt. Dadurch entstehen jeweils zueinander benachbarte Spiralwindungsäste, die gemeinsam eine mehrspurige Spiralwindung bilden. Die Spiralwindungen oder Spiralwindungsäste können beispielsweise parallel zueinander verlaufen.

Das elektronische Bauelement kann insbesondere ein Halbleiterbauelement sein. Das Halbleiterbauelement kann durch einen ungehäusten Halbleiterchip (bare die) gebildet sein. Dies ermöglicht weiter verringerte Kosten bei der Herstellung der erfindungsgemäßen Datenübertragungseinrichtung, da der Chip nicht zunächst in einem Modul montiert werden muss. Alternativ kann das Bauelement aber auch ein gehäustes Bauelement sein, beispielsweise ein Surface Mount Device (SMD) oder ein Chip Scale Package (CSP), oder in einer der folgenden Gehäuseformen: DIP, TQFP, MLF, SOTP, SOT, PLCC, QFN, SSOT, BGA, MOB, oder andere übliche Gehäuseformen vorliegen. Des Weiteren können auch Submodule als Chipträger, basierend auf flexiblen Leiterplatten (Interposa) aus Polyimid, FR4, PC, dünnem Glas, verwendet werden. Das elektronische Bauelement kann mindestens zwei Kontaktstellen aufweisen, die an der Kontaktierungsseite des Bauelements an einander gegenüber liegenden Seiten eines Randes des Elements angeordnet sind.

Eine maximale Dimension, z.B. eine maximale Breite, Höhe (bzw. Länge) und/oder Dicke, des Chips kann bevorzugt kleiner als 100 µm, weiter bevorzugt kleiner als 70 µm, weiter bevorzugt kleiner als 50 µm sein. Eine minimale Dimension, z.B. eine minimale Breite, Höhe und/oder Dicke, des Chips kann bevorzugt größer als 1 µm, weiter bevorzugt größer als 3 µm sein. Z.B. kann der Chip aber auch eine Breite von 2,5 mm, eine Höhe von 3,5 mm und eine Dicke von 50 µm aufweisen. Üblich ist eine Breite im Bereich von 1 mm bis 5mm, eine Höhe im Bereich von 1 mm bis 5 mm und eine Dicke im Bereich bis zu 100 µm. Die Dicke bezeichnet hierbei ein Abmaß des Chips senkrecht zu Oberfläche des Trägerkörpers, während die Breite und die Höhe Abmaße der Grundfläche des Chips bezeichnen.

Das elektronische Bauelement, insbesondere das als Halbleiterchip ausgebildetes Bauelement, kann in der Flip-Chip-Technik auf der Antennenstruktur montiert werden. Diese Technik schließt ein, dass das elektronische Bauelement an dessen Kontaktstellen über Kontakthöcker mit nach unten orientierter Kontaktierungsseite des elektronischen Bauelements auf die Antennenstruktur montiert (mechanisch und elektrisch verbunden) wird. Hierzu wird typischerweise ein anisotroper Leitkleber verwendet, der den gesamten Raum zwischen der Kontaktierungsseite des elektronischen Bauelements und der Seite des Trägerkörpers, auf der sich die Antennenstruktur befindet, ausfüllt. Dieser Kleber hat die Eigenschaft, nur in den Bereichen einen elektrischen Kontakt herzustellen, in denen die miteinander in Kontakt zu bringenden Kontaktflächen einander sehr nahe kommen bzw. sich berühren. Durch die Aufbringung von Druck auf die Klebefläche entsteht die Anisotropie der elektrischen Leitfähigkeit. Alternativ kann auch ohne Kleber gearbeitet werden und das elektronische Bauelement unter Druck bei erhöhter Temperatur mit den Anschlusskontakten verbunden werden. Weiter alternativ kann das elektronische Bauelement insbesondere in der Flip-Chip-Technik mittels Lot montiert werden, indem die Kontakthöcker des elektronischen Bauelements beispielsweise durch solder bumps gebildet sind (kollabierte Lothöcker). Besonders bevorzugt ist eine Kontaktierung des elektronischen Bauelements sowohl mittels eines anisotropen Leitklebers als auch durch ein kollabiertes Lot, das von dem anisotropen Leiterkleber umgeben ist. Dies ermöglicht eine sehr gute elektrische Leitfähigkeit und gute mechanische Eigenschaften, z. B. eine hohe Festigkeit. Alternativ können die Kontakthöcker auch aus Nickel mit Goldauflage oder aus Palladium gebildet sein. In diesem Falle wird die Montage ausschließlich mittels des anisotropen Leitklebers vorgenommen. Der anisotrope Leitkleber kann beispielsweise mittels eines Dispensers oder durch Aufdrucken auf den Trägerkörper bzw. die Antennenstruktur aufgebracht werden.

Für die Montage des elektronischen Bauelements auf der Antennenstruktur sind die relative Lage und/oder Orientierung der Kontakthöcker des Bauelements und die Anschlussbereiche der Antennenstruktur so zueinander anzuordnen, dass sie bei geeigneter Ausrichtung des Bauelements, beispielsweise eines Chips, gegenüber der Antennenstruktur einander direkt gegenüberstehen und daher einander nahe kommen, d.h. praktisch berühren, können. Diese Montagetechnik ist sehr einfach und zuverlässig durchführbar.

Alternativ kann das elektronische Bauelements in den Trägerkörper eingelassen werden, etwa indem eine Aussparung im Trägerkörper erzeugt wird, und das elektronische Bauelement in diese Aussparung in einer Orientierung, in der die Kontaktierungsseite mit den Kontaktstellen des elektronischen Bauelements nach oben zeigt, eingeklebt wird, sodass die Kontaktierungsseite mit der Trägerkörperoberfläche fluchtet. In diesem Fall kann die Antennenstruktur anschließend auf der Kontaktierungsseite des elektronisches Bauelements und der Trägeroberfläche erzeugt werden, beispielsweise durch Aufdrucken.

### 4. Erzeugen eines Durchleuchtungsbildes von einem Bereich der Datenübertragungseinrichtung, in dem zumindest ein Abschnitt der Antennenstruktur und das elektronische Bauelement zumindest teilweise, vorzugsweise vollständig, angeordnet sind.

Hierbei kann von dem Trägerkörper und der darauf angeordneten Antennenstruktur sowie dem elektronischen Bauelement ein Durchleuchtungsbild erzeugt werden.

Das Durchleuchtungsbild kann z.B. röntgenbasiert erzeugt werden, wobei eine Röntgeneinrichtung ein Röntgenbild von dem Trägerkörper erzeugt. Die Röntgeneinrichtung kann beispielsweise eine mobile Röntgeneinrichtung sein, wobei die Röntgeneinrichtung derart relativ zu dem Trägerkörper bewegt wird, dass ein vorbestimmter Zielbereich des Trägerkörpers abgebildet wird. Auch ist vorstellbar, dass die Röntgeneinrichtung eine ortsfest angeordnete Röntgeneinrichtung ist, wobei z.B. eine Positioniereinrichtung den Trägerkörper oder einen Bogen, der n x m Dokumente, also Trägerkörper mit jeweils aufgebrachten Antennenstrukturen und elektronischen Bauelementen, umfasst, derart relativ zur Röntgeneinrichtung positioniert, dass ein vorbestimmter Zielbereich des Trägerkörpers abgebildet wird. Ist der Trägerkörper in einem Bogen von mehreren solcher Dokumente oder Nutzen enthalten, so kann das vorgeschlagene Verfahren sequenziell für verschiedene Teilbereiche eines Dokuments oder für mehrere, insbesondere alle, Dokumente des Bogens durchgeführt werden. Hierzu kann z.B. die vorhergehend erwähnte Positioniereinrichtung den Bogen sequenziell derart relativ zu der Röntgeneinrichtung positionieren, dass gewünschte Zielbereiche eines Dokuments oder verschiedener Dokumente abgebildet werden.

Das Durchleuchtungsbild kann ein pixelbasiertes Durchleuchtungsbild sein, welches z.B. a x b Pixel umfasst. Jedem Pixel kann hierbei mindestens ein Intensitätswert, insbesondere ein Grauwert, bei der Bilderzeugung zugeordnet werden. Wird ein Farbbild erzeugt, z.B. ein RGB-Bild, so können Durchleuchtungsbilder in verschiedenen Farbkanälen erzeugt werden, deren Pixel wiederum Intensitätswerte der einzelnen Farben zugeordnet werden.

Wird das Durchleuchtungsbild röntgenbasiert erzeugt, so werden z.B. Bereiche des Trägerkörpers, die verhältnismäßig wenig Röntgenstrahlung absorbieren, hell, also mit einem hohen Grauwert, dargestellt. Entsprechend werden Bereiche, die viel Röntgenstrahlung absorbieren, dunkel, also mit einem niedrigen Grauwert, dargestellt.

Da die Antennenstruktur oder das elektronische Bauelement aus einem Material ausgebildet sind, welches verhältnismäßig viel Röntgenstrahlung absorbiert, sind Bildbereiche, in die die Antennenstruktur oder das elektronische Bauelement abgebildet sind, in Relation zu anderen Bildbereichen z. B. mit niedrigen Grauwerten dargestellt, was eine gute Erkennbarkeit der Antennenstruktur und des elektronischen Bauelements gewährleistet.

Es ist möglich, dass das Durchleuchtungsbild auch einen Teil des Trägerkörpers abbildet, wobei auf diesem Teil der zumindest eine Abschnitt der Antennenstruktur und das elektronische Bauelement zumindest teilweise angeordnet sind.

Insbesondere kann das Durchleuchtungsbild einen Bereich des Trägerkörpers abbilden, der dem Montagebereich entspricht oder diesen zumindest umfasst.

Das Durchleuchtungsbild, wie vorhergehend erwähnt, kann auch in einer Durchleuchtungseinrichtung aufgenommen werden, in welcher eine Durchleuchtungsquelle, bevorzugt eine Röntgenquelle, sowie ein Detektor, bevorzugt ein Zeilendetektor, ortsfest angeordnet sind. Der Trägerkörper kann in diesem Fall in einen Erfassungsbereich der Durchleuchtungseinrichtung eingebracht oder durch den Erfassungsbereich hindurchgeführt werden, z.B. durch eine Positioniereinrichtung zur Positionierung des Trägerkörpers oder einen den Trägerkörper umfassenden Bogen. Insbesondere kann der Trägerkörper derart in den Erfassungsbereich eingebracht werden oder durch den Erfassungsbereich hindurchgeführt werden, dass der Trägerkörper zeilenweise abgebildet werden kann. In diesem Fall arbeitet die Durchleuchtungseinrichtung nach dem Prinzip eines Zeilenscanners. Zeilenweise kann z.B. bedeuten, dass eine Abbildung von einem Teilbereich des Trägerkörpers in eine eindimensionale Reihenfolge von Bildpunkten (Zeile) erfolgt, beispielsweise von einem rechteckigen Teilbereich, dessen Längsachse quer zu einer Transportrichtung des Trägerkörpers orientiert ist. Hierbei werden durch Transport des Trägerkörpers in Transportrichtung Teilbereiche, die in Transportrichtung benachbart sind, in verschiedene Zeilen abgebildet. Der rechteckige Teilbereich kann hierbei eine größere Dimension entlang der Längsrichtung als in Transportrichtung aufweisen. Dies ermöglicht in vorteilhafter Weise eine gute Einbindung der Erzeugung des Durchleuchtungsbildes in einen kontinuierlichen Herstellungsprozess und ist daher bevorzugt.

### 5. Bestimmen zumindest eines Bildbereiches, in dem der zumindest eine Abschnitt der Antennenstruktur oder ein Teil des Abschnitts abgebildet it.

Hierbei erfolgt eine Segmentierung von einem oder mehreren Bildbereichen, in den/die die Antennenstruktur oder ein Teil davon abgebildet ist/sind.

Hierfür kann eine Vielzahl von existierenden Segmentierungsverfahren angewendet werden. So kann z.B. ein intensitätswertbasiertes Segmentierverfahren angewendet werden, wobei in einem intensitätswertbasierten Segmentierverfahren eine Zerlegung des Bildes in Bildbereiche in Abhängigkeit der Intensitätswerte der einzelnen Pixel durchgeführt wird. Beispielsweise kann eine histogrammbasierte Segmentierung durchgeführt werden. Auch können Segmentierungsverfahren entsprechend so genannter Homogenitätskriterien durchgeführt werden, wobei Bildbereiche zusammengefasst werden, in denen eine Intensitätswertverteilung vorbestimmten Homogenitätskriterien entspricht. Auch können Segmentierungsverfahren nach so genannten Diskontinuitätskriterien durchgeführt werden, insbesondere kantenbasierte Segmentierungsverfahren. Hierbei können Kantenpixel als lokale Maxima in Gradientenrichtung bzw. Nulldurchgänge einer zweiten Ableitung eines Intensitätswertverlaufs detektiert werden. Ein Segment kann z.B. als von Kantenpixeln oder von zu Kantenzügen zusammengefassten Kantenpixeln eingeschlossener Bildbereich bestimmt werden.

Das Bestimmen des Bildbereiches, in dem die Antennenstruktur oder ein Teil davon abgebildet ist, kann auch in Abhängigkeit vorbekannter geometrischer Dimensionen und/oder Verläufe der Antennenstruktur erfolgen. Umfasst die Antennenstruktur z.B. mehrere parallel verlaufende Leiterzüge, so können Bildbereiche detektiert werden, deren Kantenzüge parallel oder annähernd parallel verlaufen, wobei die von den Kantenzügen eingeschlossenen Bildbereiche z. B. niedrige Intensitätswerte aufweisen. Auch ist möglich, dass ein Suchbereich im Durchleuchtungsbild in Abhängigkeit vorbekannter geometrischer Referenzstrukturen des Trägerkörpers bestimmt wird. Ist eine geometrische relative Lage und/oder Ausrichtung von Antennenstrukturen zu den Referenzstrukturen bekannt, so kann ein Suchbereich in Abhängigkeit dieser vorbekannten relativen Lage und/oder Orientierung definiert werden, wobei die Segmentierung dann, z. B. ausschließlich, in dem Suchbereich durchgeführt wird.

Auch kann das Bestimmen zumindest eines Bildbereiches oder des vorhergehend erläuterten Suchbereiches in Abhängigkeit von Erfahrungswerten erfolgen, die z.B. in vorhergehenden Verfahren gewonnen und gespeichert wurden. So kann z.B. in vorhergehenden Verfahren gespeichert werden, in welchem Teilbereich des Bildes die jeweilige gesuchte Antennenstruktur abgebildet wurde. Ein Suchbereich in einem aktuell erzeugten Durchleuchtungsbild kann dann in Abhängigkeit der Lage und/oder Orientierung dieser vorbekannten Teilbereiche bestimmt werden.

### 6. Bestimmen zumindest eines Bildbereichs, in dem das elektronische Bauelement oder ein Teil des elektronischen Bauelements abgebildet ist.

Zur Bestimmung eines Bildbereichs, in dem das elektronische Bauelement oder ein Teil davon abgebildet ist, können ebenfalls Segmentierungsverfahren durchgeführt werden. Hierzu wird auf die vorhergehenden Erläuterungen zur Bestimmung von Bildbereichen, in die die Antennenstruktur oder Teile davon abgebildet sind, verwiesen, wobei die beschriebenen Verfahren ebenfalls zur Segmentierung des elektronischen Bauelements eingesetzt werden können.

### 7. Bildbasiertes Bestimmen einer relativen Lage und/oder Orientierung der Antennenstruktur zum elektronischen Bauelement

Hierzu kann beispielsweise eine bildbasierte Lage, z.B. in Pixelkoordinaten, und/oder eine bildbasierte Orientierung der Antennenstruktur oder eines Teils davon bestimmt werden. Bildbasiert bedeutet hierbei, dass die Lage und/oder Orientierung in einem Bildkoordinatensystem bestimmt wird.

Beispielsweise kann/können mindestens ein Referenzpunkt und/oder mindestens eine Referenzlinie der abgebildeten Antennenstruktur bestimmt werden.

Eine Referenzlinie kann beispielsweise eine Mittellinie oder mindestens eine Kantenlinie der abgebildeten Antennenstruktur sein, wobei eine bildbasierte Lage dieser Referenzlinie den Pixelkoordinaten entsprechen kann, deren Pixel die Mittellinie oder die Kantenlinie abbilden. Eine bildbasierte Orientierung der Antennenstruktur kann in diesem Fall z. B. in Abhängigkeit eines Winkels bestimmt werden, unter dem sich die Referenzlinie und eine ortsfeste Bildlinie, z.B. eine oberste Bildzeile, schneiden.

Ein Referenzpunkt der abgebildeten Antennenstruktur kann beispielsweise ein Mittelpunkt eines Bildbereichs sein, in den ein vorbestimmter Bereich der Antennenstruktur abgebildet ist.

Entsprechend kann eine bildbasierte Lage und/oder bildbasierte Orientierung des abgebildeten elektronischen Bauelements bestimmt werden. Auch für das abgebildete elektronische Bauelement kann/können mindestens ein Referenzpunkt und/oder mindestens eine Referenzlinie bestimmt werden. Entsprechend den vorhergehenden Ausführungen kann eine Referenzlinie eine Mittellinie oder Kantenlinie des abgebildeten elektronischen Bauelements sein. Ein Referenzpunkt kann insbesondere auch ein Mittelpunkt des abgebildeten elektronischen Bauelements sein.

Selbstverständlich sind auch weitere Kriterien zur Bestimmung von Referenzpunkten und/oder Referenzlinien vorstellbar.

In Abhängigkeit der bildbasierten Lagen und/oder bildbasierten Orientierungen der abgebildeten Antennenstruktur und des abgebildeten elektronischen Bauelements kann dann eine relative Lage und/oder relative Orientierung bestimmt werden.

Als relative Orientierung kann beispielsweise bestimmt werden, unter welchem Winkel sich die Referenzlinien schneiden. Als relative Lage kann beispielsweise eine Pixeldifferenz zwischen den Referenzpunkten bestimmt werden.

### 8. Auswerten eines lage- und/oder orientierungsabhängigen Qualitätskriteriums

Hierbei kann bestimmt werden, ob die relative Lage zueinander vorbestimmten Anforderungen an die relative Positionierung zueinander entspricht.

Beispielsweise kann das Qualitätskriterium erfüllt sein, wenn eine als Pixeldifferenz ausgedrückte relative Lage des elektronischen Bauelements zur Antennenstruktur kleiner als eine vorbestimmte Pixeldifferenz oder größer als eine vorbestimmte Pixeldifferenz ist oder in mindestens einem vorbestimmten Pixeldifferenzbereich liegt. Entsprechend kann ein Qualitätskriterium erfüllt sein, wenn ein Winkel, unter dem sich eine Referenzlinie der Antennenstruktur und eine Referenzlinie des elektronischen Bauelements schneiden, kleiner als ein vorbestimmter Winkel ist oder größer als ein vorbestimmter Winkel ist oder in mindestens einem vorbestimmten Winkelbereich liegen.

Hierdurch wird in vorteilhafter Weise eine bildbasierte Bestimmung einer relativen Lage des elektronischen Bauelements zu einer Antennenstruktur sowie die Auswertung eines davon abhängigen Qualitätskriteriums ermöglicht. Somit kann bildbasiert detektiert werden, ob das elektronische Bauelement mit einer gewünschten relativen Lage und/oder relativen Orientierung zu der Antennenstruktur auf den Trägerkörper aufgebracht wurde.

Ist dies nicht der Fall, ist also beispielsweise das mindestens eine Qualitätskriterium nicht erfüllt, so kann der Trägerkörper mit der Datenübertragungseinrichtung als Ausschuss klassifiziert werden. Hierbei ist möglich, dass ein Ausschuss bildendes Dokument, also ein Trägerkörper mit einer Datenübertragungseinrichtung, aussortiert wird und nachfolgende Prozessschritte, beispielsweise eine Lamination oder ein Aufbringen weiterer Kunststofflagen, nicht mehr durchläuft. Wie nachfolgend ausgeführt, kann durch eine Rückkopplung der relativen Lagen und/oder Orientierung frühzeitig das Entstehen von Ausschuss vermieden werden, da eine Anpassung von Positionierparameter bereits erfolgen kann, bevor Ausschuss entsteht.

Somit ermöglicht das vorgeschlagene Verfahren in vorteilhafter Weise eine Reduktion von Ausschuss, insbesondere für nachfolgende Prozessschritte des Herstellungsprozesses.

In einer weiteren Ausführungsform weist das elektronische Bauelement mindestens zwei Kontaktstellen auf. Die Kontaktstellen können hierbei auch als so genannte Bumps bezeichnet werden. Weiter wird ein erster Bildbereich bestimmt, in dem eine erste Kontaktstelle abgebildet ist, wobei ein zweiter Bildbereich bestimmt wird, in dem eine zweite Kontaktstelle abgebildet ist.

Weiter wird eine bildbasierte Lage und/oder Orientierung des elektronischen Bauelements in Abhängigkeit einer Lage des ersten Bildbereichs und des zweiten Bildbereichs bestimmt. Die Kontaktstellen können hierbei insbesondere in einem rechteckförmigen Bereich abgebildet werden. Kontaktstellen bestehen üblicherweise aus einem Material mit einer hohen Ordnungszahl und/oder hohen Dichte und/oder hohen Dicke. Z.B. kann die Antennenstruktur aus Silber mit einer Ordnungszahl von 47 und einer Atommasse von beispielsweise107,87 u bestehen. Die Kontaktstellen können aus Gold mit einer Ordnungszahl von 79 und einer Atommasse von beispielsweise 196,97 u bestehen.

Strahlung der Einrichtung zur Erzeugung des Durchleuchtungsbildes, insbesondere der Röntgeneinrichtung, wird daher von den Kontaktstellen stark absorbiert. Somit sind Kontaktstellen, die aus dem vorhergehend genannten Material ausgebildet sind, im Durchleuchtungsbild als Bereiche niedriger Intensität gut erkennbar und bildbasiert detektierbar.

Als Referenzlinie des elektronischen Bauelements kann in diesem Fall beispielsweise eine Linie bestimmt werden, die durch die Mittelpunkte der zwei Bildbereiche verläuft. Hierzu ist es notwendig, für jeden Bildbereich jeweils den Mittelpunkt zu bestimmen. Ein Referenzpunkt des elektronischen Elements kann beispielsweise als Mittelpunkt zwischen den beiden Bildbereichen bestimmt werden, wobei der Mittelpunkt auf der vorher erläuterten Referenzlinie liegt und wobei weiter ein Abstand des Mittelpunktes zu den Mittelpunkten der jeweiligen Bildbereiche gleich ist.

Hierdurch kann in vorteilhafter Weise eine einfache, robuste und zuverlässige Bestimmung einer bildbasierten Lage und/oder bildbasierten Orientierung des elektronischen Bauelements, insbesondere relativ zu einem Bildkoordinatensystem, erfolgen.

Dann kann in Abhängigkeit dieser bildbasierten Lage und/oder bildbasierten Orientierung wie vorhergehend erläutert die relative Lage und/oder relative Orientierung der Antennenstruktur zum elektronischen Bauelement bestimmt werden.

In einer weiteren Ausführungsform weist die Antennenstruktur mindestens zwei Anschlussbereiche auf. Die Anschlussbereiche können auch als Landepads oder Anschlusskontakte bezeichnet werden. Diese dienen zur elektrischen Kontaktierung der vorhergehend erläuterten Kontaktstellen des elektronischen Bauelements.

Hierbei wird ein dritter Bildbereich bestimmt, in dem ein erster Anschlussbereich der Antennenstruktur abgebildet ist, wobei ein vierter Bildbereich bestimmt wird, in dem ein zweiter Anschlussbereich abgebildet ist.

Insbesondere können die Anschlussbereiche in rechteckförmige Bildbereiche abgebildet werden. Hierdurch ist es möglich, einen Mittelpunkt der die Anschlussbereiche abbildenden Bildbereiche zu bestimmen. Eine Referenzlinie der Antennenstruktur kann dann beispielsweise als eine Verbindungslinie zwischen diesen Mittelpunkten bestimmt werden. Ein Referenzpunkt der Antennenstruktur kann dann beispielsweise als Mittelpunkt zwischen den vorhergehend erläuterten Mittelpunkten der die Anschlussbereiche abbildenden Bildbereiche bestimmt werden, der auf der Referenzlinie liegt und von den Mittelpunkten der Bereiche mit gleichem Abstand beabstandet ist.

Alternativ oder kumulativ zu den abgebildeten Anschlussbereichen können auch Bildbereiche von anderen abgebildeten Strukturen, insbesondere Strukturen, deren Lage relativ zu den Anschlussbereichen bekannt ist, bestimmt und zur Bestimmung von Referenzlinie und/oder Referenzpunkt der Antennenstruktur genutzt werden.

Dies ermöglicht in vorteilhafter Weise eine einfache, zuverlässige und robuste Bestimmung einer Referenzlinie und/oder eines Referenzpunktes der Antennenstruktur in einem Bildkoordinatensystem.

In Abhängigkeit dieser bildbasierten Lage und/oder Orientierung kann dann die relative Lage und/oder relative Orientierung der Antennenstruktur zu dem elektronischen Bauelement bestimmt werden.

In einer weiteren Ausführungsform werden Mittelpunkte der Bildbereiche, in die die Kontaktstellen abgebildet sind, und/oder Mittelpunkte der Bildbereiche, in die die Anschlussbereiche abgebildet sind, bestimmt. Weiter wird bildbasiert, wie vorhergehend erläutert, die relative Lage und/oder relative Orientierung der Antennenstruktur zum elektronischen Bauelement in Abhängigkeit dieser bestimmten Mittelpunkte bestimmt.

Dies ermöglicht in vorteilhafter Weise eine einfache, zuverlässige und robuste bildbasierte Bestimmung der relativen Lage und/oder relativen Orientierung der Antennenstruktur zum elektronischen Bauelement.

In einer weiteren Ausführungsform wird das Durchleuchtungsbild derart erzeugt, dass zusätzlich mindestens eine Referenzstruktur mit vorbekannten geometrischen Eigenschaften abgebildet wird. Geometrische Eigenschaften können z.B. tatsächliche Dimensionen, z.B. eine tatsächliche Breite, eine tatsächliche Höhe und/oder eine tatsächliche Dicke, umfassen. Geometrische Eigenschaften können jedoch auch Winkeleigenschaften umfassen. So ist es beispielsweise vorstellbar, dass die Referenzstruktur Bereiche aufweist, die sich unter einem bekannten tatsächlichen Winkel schneiden oder die einen bekannten tatsächlichen Winkel einschließen. Die Referenzstruktur kann hierbei ebenfalls auf dem Trägerkörper angeordnet sein. Selbstverständlich ist es auch vorstellbar, dass die Referenzstruktur nicht auf dem Trägerkörper angeordnet ist und beispielsweise von außen in den Erfassungsbereich der Einrichtung zur Erzeugung des Durchleuchtungsbildes eingebracht wird.

Die Referenzstruktur ermöglicht hierbei in vorteilhafter Weise eine Ermittlung eines Zusammenhangs zwischen bildbasierten geometrischen Eigenschaften, beispielsweise bildbasierten Dimensionen oder Winkeleigenschaften, und tatsächlichen geometrischen Eigenschaften. In Abhängigkeit einer vorbekannten tatsächlichen Dimension der Referenzstruktur kann beispielsweise ein Zusammenhang zwischen einer Pixelgröße des Bildbereiches, in welchem die Referenzstruktur abgebildet ist, und der tatsächlichen Größe, beispielsweise einer in Mikrometern gemessenen Größe, bestimmt werden.

In Abhängigkeit der Referenzstruktur kann somit in vorteilhafter Weise ein Abbildungsmaßstab des Durchleuchtungsbildes bestimmt werden. In Abhängigkeit des Abbildungsmaßstabes lässt/lassen sich dann in vorteilhafter Weise ein tatsächlicher Abstand von Antennenstruktur und dem elektronischen Bauelement, insbesondere von Referenzpunkten der Antennenstruktur und des elektronischen Bauelements, und/oder eine tatsächliche Orientierung der Antennenstruktur zum elektronischen Bauelement bestimmen.

Beispielsweise kann eine tatsächliche Entfernung, also eine in z.B. Mikrometern gemessene Entfernung, der vorhergehend erläuterten Referenzpunkte der Antennenstruktur und des elektronischen Bauelements bestimmt werden. Auch kann ein tatsächlicher Winkel, unter dem sich die vorhergehend erläuterten Referenzlinien der Antennenstruktur und des elektronischen Bauelements schneiden, und somit eine tatsächliche relative Orientierung zueinander bestimmt werden.

Die Abbildung der Referenzstruktur mit vorbekannten geometrischen Eigenschaften erlaubt somit in vorteilhafter Weise die Auswertung mindestens eines Qualitätskriteriums in Abhängigkeit von tatsächlichen, also realen, Entfernungen und/oder Orientierungen.

Selbstverständlich ist es auch möglich, dass ein Zusammenhang zwischen bildbasierten geometrischen Eigenschaften und tatsächlichen geometrischen Eigenschaften vorbekannt ist, z.B. in Testbildern ermittelt wird.

In einer weiteren Ausführungsform wird die Referenzstruktur durch die zwei Kontaktstellen des elektronischen Bauelements gebildet. Hierbei wird ausgenutzt, dass die zwei Kontaktstellen des elektronischen Bauelements, insbesondere die Mittelpunkte der Kontaktstellen, einen vorbekannten tatsächlichen Abstand aufweisen, der nur einer sehr geringen Toleranz unterliegt. Dies ermöglicht somit, wie vorhergehend erläutert, eine zuverlässige Ermittlung eines Abbildungsmaßstabes.

Das vorgeschlagene Verfahren kann hierbei sequenziell für mehrere Dokumente, also Trägerkörper mit einer Datenübertragungseinrichtung, durchgeführt werden. Beispielsweise kann das Verfahren sequenziell für mehrere oder alle Dokumente eines Bogens durchgeführt werden, wobei der Bogen n x m Dokumente umfasst. Hierbei werden im Herstellungsprozess Bögen bereitgestellt, die jeweils n x m Dokumente umfassen. Selbstverständlich ist es auch vorstellbar, dass das Verfahren für einzelne, mehrere oder alle Dokumente mehrerer Bögen durchgeführt wird. Werden die Trägerkörper der einzelnen Dokumente jeweils mit dem gleichen elektronischen Bauelement bestückt, so kann zur Ermittlung des vorhergehend erläuterten Abbildungsmaßstabes auch in Abhängigkeit von gemittelten bildbasierten Abständen der die Kontaktstellen abbildenden Bildbereiche bestimmt werden. Hierdurch ergibt sich in vorteilhafter Weise, dass z.B. ein durch eine Durchbiegung eines Bogens oder eines Dokuments verursachter Fehler bei der Bestimmung des Abbildungsmaßstabes reduziert wird.

In einer weiteren Ausführungsform wird zusätzlich ein Bildbereich bestimmt, in dem eine Klebstofffläche abgebildet ist. Wie vorhergehend erläutert, verbindet der Klebstoff hierbei die Antennenstruktur und das elektronische Bauelement. Weiter wird zumindest eine bildbasierte Dimension der Klebstofffläche und/oder eine relative Lage und/oder relative Orientierung der Klebstofffläche zum elektronischen Bauelement bestimmt.

Eine Dimension kann beispielsweise eine maximale Breite der Klebstofffläche sein, wobei eine Breite z. B. in einer horizontalen Bildrichtung bestimmt wird. Selbstverständlich kann eine Dimension alternativ oder kumulativ auch eine maximale Höhe der abgebildeten Klebstofffläche sein, wobei die Höhe in vertikaler Bildrichtung bestimmt wird. Auch kann die Dimension ein maximaler Durchmesser der Klebstofffläche sein.

Auch für die Klebstofffläche kann/können entsprechend den vorhergehenden Ausführungen mindestens ein Referenzpunkt und/oder eine Referenzlinie bestimmt werden. Beispielsweise kann ein Mittelpunkt und/oder geometrischer Schwerpunkt des Bildbereiches, in den die Klebstofffläche abgebildet ist, als Referenzpunkt bestimmt werden. Als Referenzlinie kann beispielsweise eine Linie, die einen linken, oberen Bildpunkt des Durchleuchtungsbildes mit dem Mittelpunkt verbindet, bestimmt werden.

In Abhängigkeit dieses Referenzpunktes und/oder dieser Referenzlinie kann die dann relative Lage und/oder relative Orientierung der Klebstofffläche zum elektronischen Bauelement, insbesondere zu dem vorhergehend erläuterten Referenzpunkt und/oder der vorhergehend erläuterten Referenzlinie des elektronischen Bauelements, bestimmt werden.

Dies wiederum ermöglicht die Bestimmung einer relativen Lage, beispielsweise einer Entfernung, beispielsweise einer als Pixeldifferenz ausgedrückten Entfernung, und/oder einer relativen Orientierung der Klebstofffläche zum elektronischen Bauelement.

Weiter kann ein von dieser relativen Lage und/oder relativen Orientierung abhängiges Qualitätskriterium ausgewertet werden. Beispielsweise ist das Qualitätskriterium erfüllt, wenn die relative Lage und/oder Orientierung kleiner als ein vorbestimmter Schwellwert ist oder größer als ein vorbestimmter Schwellwert ist oder in mindestens einem vorbestimmten Bereich liegt.

Hierdurch ergibt sich in vorteilhafter Weise, dass bildbasiert auch ein Qualitätskriterium auswertbar ist, welches einen Rückschluss auf eine Qualität der Befestigung und/oder elektrischen Kontaktierung des elektronischen Bauelements ermöglicht. Auch ist eine Gleichmäßigkeit der Klebstoffverteilung und/oder die Übereinstimmung der Klebstofffläche mit einem später in das Dokument zu schneidenden Fenster, z.B. einem Fenster in einer Ausgleichsfolie, bestimmbar, der/die entscheidend für eine Qualität der Weiterverarbeitung ist/sind. So kann ein Qualitätskriterium beispielsweise dann erfüllt sein, wenn die Klebstofffläche nicht oder nur um ein vorbestimmtes geringes Maß größer als die Dimension des zu schneidenden Fensters ist, da idealerweise Dimensionen des Fensters gleich den Dimensionen der Klebstofffläche sein sollten.

Selbstverständlich ist es auch möglich, eine relative Lage und/oder relative Orientierung der Klebstofffläche zur Antennenstruktur zu bestimmen.

In einer weiteren Ausführungsform umfasst das Verfahren folgende Verfahrensschritte:
1. Bereitstellen eines ersten Trägerkörpers,
2. Aufbringen einer ersten Antennenstruktur auf den ersten Trägerkörper,
3. Aufbringen eines elektronischen Bauelements auf den ersten Trägerkörper in Abhängigkeit mindestens eines bauelementspezifischen Aufbringparameters.
   Der bauelementspezifische Aufbringparameter kann insbesondere ein Positionierparameter einer Positioniereinrichtung sein, welche das elektronische Bauelement bei der Aufbringung relativ zum Trägerkörper bzw. zur Antennenstruktur positioniert. Ein derartiger Positionierparameter kann beispielsweise mindestens einen Verfahrweg der Positioniereinrichtung in Relation zu Rändern des Trägerkörpers umfassen. Sind z.B. auf dem Trägerkörper Positioniermarken angeordnet, so kann der Positionierparameter auch mindestens einen Verfahrweg der Positioniereinrichtung relativ zu diesen Positioniermarken umfassen. Selbstverständlich kann der Positionierparameter auch eine Orientierung, beispielsweise eine Verdrehung, des elektronischen Bauelements relativ zu den Rändern des Trägerkörpers oder den Positioniermarken umfassen.
   Bauelementspezifische Aufbringparameter können jedoch auch noch weitere Aufbringparameter, beispielsweise eine Aufbringgeschwindigkeit, einen Aufbringdruck, und weitere derartige Parameter umfassen.
   Zusammenfassend ergibt sich, dass mittels der Aufbringparameter eine Positionierung des elektronischen Bauelements relativ zu einem Koordinatensystem des Trägerkörpers bzw. des herzustellenden Dokuments steuerbar ist.
4. Erzeugen eines Durchleuchtungsbildes von einem Bereich, in dem zumindest ein Abschnitt der ersten Antennenstruktur und das erste elektronische Bauelement zumindest teilweise angeordnet ist,
5. Bestimmen zumindest eines Bildbereiches, in dem der zumindest eine Abschnitt der ersten Antennenstruktur oder ein Teil des Abschnitts abgebildet ist,
6. Bestimmen zumindest eines Bildbereiches, in dem das erste elektronische Bauelement oder ein Teil des elektronischen Bauelements abgebildet ist,
7. Bildbasiertes Bestimmen einer relativen Lage und/oder Orientierung der ersten Antennenstruktur zum ersten elektronischen Bauelement,
8. Bereitstellen eines weiteren Trägerkörpers.
   Das Bereitstellen des weiteren Trägerkörpers kann hierbei entsprechend den Ausführungen zum Bereitstellen des ersten Trägerkörpers erfolgen.
9. Aufbringen einer weiteren Antennenstruktur auf den weiteren Trägerkörper,
   Das Aufbringen der weiteren Antennenstruktur kann hierbei entsprechend den Ausführungen zum Aufbringen der Antennenstruktur auf den Trägerkörper erfolgen.
10. Aufbringen eines weiteren elektronischen Bauelements auf den weiteren Trägerkörper in Abhängigkeit mindestens eines bauelementspezifischen Aufbringparameters, wobei der bauelementspezifische Aufbringparameter in Abhängigkeit der für den ersten Trägerkörper bestimmten relativen Lage und/oder Orientierung der ersten Antennenstruktur zum ersten elektronischen Bauelement bestimmt wird.

Dies ermöglicht in vorteilhafter Weise eine Rückkopplung von bildbasiert bestimmten relativen Lagen und/oder Orientierungen von Antennenstrukturen zu elektrischen Bauelementen einzelner Dokumente. Somit wird eine Nachregelung des Herstellungsprozesses in Abhängigkeit dieser relativen Lagen und/oder Orientierungen ermöglicht.

Beispielsweise kann hierdurch verhindert werden, dass sich während eines Herstellungsprozesses mehrerer Sicherheits- und/oder Wertdokumente mit der vorhergehend beschriebenen Datenübertragungseinrichtung unerwünschte relative Lagen und/oder Orientierungen der Antennenstrukturen zu den elektronischen Bauelementen ergeben. Wie nachfolgend ausgeführt kann durch eine Rückkopplung der relativen Lagen und/oder Orientierung frühzeitig das Entstehen von Ausschuss vermieden werden.

Wird beispielsweise detektiert, dass eine Differenz von einer bildbasiert bestimmten relativen Lage und/oder Orientierung zu einer gewünschten relativen Lage und/oder Orientierung betragsmäßig zunimmt, so kann der mindestens eine bauelementspezifische Aufbringparameter, insbesondere der vorhergehend erläuterte Positionierparameter, derart angepasst werden, dass die erwünschte Abweichung reduziert oder minimiert wird. Hierdurch kann in vorteilhafter Weise Ausschuss, insbesondere für nachfolgende Prozessschritte, verringert werden.

Zu beachten ist, dass die erläuterte Rückkopplung unabhängig von dem Ergebnis der Auswertung des mindestens einen Qualitätskriteriums ist. Bevorzugt kann eine Anpassung des mindestens einen bauelementspezifischen Aufbringparameters auch dann erfolgen, wenn zwar eine Differenz zwischen einer tatsächlichen relativen Lage und/oder Orientierung und einer gewünschten relativen Lage und/oder Orientierung besteht, das mindestens eine Qualitätskriterium jedoch noch erfüllt ist.

Hierbei kann z.B. ein optimaler Wertebereich der relativen Lage und/oder Orientierung definiert sein, wobei keine Veränderung des mindestens einen bauelementspezifischen Aufbringparameters erfolgt und das Qualitätskriterium erfüllt ist, wenn die aktuell bestimmte Lage und/oder Orientierung in diesem Bereich liegt. In diesem Fall bildet das Dokument keinen Ausschuss und es ist keine Nachregelung erforderlich.

Weiter kann z.B. ein vom optimalen Wertebereich verschiedener Grenzbereich der relativen Lage und/oder Orientierung definiert sein, wobei eine Veränderung des mindestens einen bauelementspezifischen Aufbringparameters erfolgt und das Qualitätskriterium erfüllt ist, wenn die aktuell bestimmte Lage und/oder Orientierung in diesem Bereich liegt. Auch in diesem Fall bildet das Dokument keinen Ausschuss, jedoch ist eine Nachregelung erforderlich.

Weiter kann z.B. ein vom optimalen Wertebereich und vom Grenzbereich verschiedener Ausschussbereich der relativen Lage und/oder Orientierung definiert sein, wobei eine Veränderung des mindestens einen bauelementspezifischen Aufbringparameters erfolgt und das Qualitätskriterium nicht erfüllt ist, wenn die aktuell bestimmte relative Lage und/oder Orientierung in diesem Bereich liegt. In diesem Fall bildet das Dokument jedoch Ausschuss.

Hierdurch ergibt sich in vorteilhafter Weise eine Regelung des Herstellungsprozesses in Abhängigkeit des mindestens einen relativen Lage und/oder Orientierung, wodurch die Herstellungsgüte weiter verbessert und der Ausschuss weiter minimiert werden kann. Insbesondere wird eine frühzeitige Erkennung von unerwünschten Abweichungen detektiert und in den Herstellungsprozess rückgekoppelt, sodass eine Anpassung der Bestückung mit dem elektrischen Bauelement bereits vor dem Entstehen von Ausschuss erfolgt.

Selbstverständlich können die vorhergehend erläuterten Verfahren auch den Verfahrensschritt des elektrischen Verbindens des elektronischen Bauelements mit der Antennenstruktur umfassen.

In einer weiteren Ausführungsform wird zusätzlich auf den ersten Trägerkörper ein Klebstoff in Abhängigkeit eines klebstoffspezifischen Aufbringparameters aufgebracht. Der klebstoffspezifische Parameter kann beispielsweise eine Menge, eine Aufbringgeschwindigkeit, einen Aufbringdruck bzw. Förderdruck, eine Förderzeit oder weitere derartige Parameter umfassen. Auch kann der klebstoffspezifische Aufbringparameter, entsprechend den Ausführungen zum bauelementspezifischen Aufbringparameter, ein Positionierparameter sein, wobei in Abhängigkeit des Positionierparameters eine Position relativ zu Rändern des Trägerkörpers oder relativ zu Steuermarken einstellbar ist, an der der Klebstoff aufgebracht wird.

Weiter wird zusätzlich ein Bildbereich bestimmt, in dem eine Klebstofffläche abgebildet ist, wobei der Klebstoff die Antennenstruktur und das elektronische Bauelement des ersten Trägerkörpers verbindet. Weiter wird zumindest eine bildbasierte Dimension der ersten Klebstofffläche und/oder eine relative Lage und/oder Orientierung der ersten Klebstofffläche zum ersten elektronischen Bauelement bestimmt. Weiter wird zusätzlich auf den weiteren Trägerkörper ein Klebstoff in Abhängigkeit des mindestens einen klebstoffspezifischen Aufbringparameters aufgebracht, wobei der klebstoffspezifische Aufbringparameter in Abhängigkeit der Dimension der ersten Klebstofffläche und/oder der relativen Lage und/oder Orientierung der ersten Klebstofffläche zum ersten elektronischen Bauelement bestimmt wird.

Dies erlaubt in vorteilhafter Weise eine Rückkopplung der Dimension der Klebstofffläche und/oder der relativen Lage und/oder Orientierung der Klebstofffläche zum elektronischen Bauelement in den Aufbringprozess von Klebstoff auf weitere Trägerkörper. Insgesamt ergibt sich hierdurch eine Regelung des Aufbringens des Klebstoffes in Abhängigkeit der Dimension und/oder der relativen Lage und/oder Orientierung von Klebstoffflächen zu elektronischen Bauelementen eines Trägerkörpers.

Insbesondere kann der mindestens eine klebstoffspezifische Aufbringparameter derart eingestellt werden, dass eine Abweichung einer bildbasiert bestimmten Dimension von einer gewünschten Dimension der Klebstofffläche und/oder einer bildbasiert bestimmten relativen Lage zu einer gewünschten relativen Lage der Klebstofffläche zum entsprechenden elektronischen Bauelement und/oder einer bildbasiert bestimmten relativen Orientierung zu einer gewünschten Orientierung der Klebstofffläche zum entsprechenden elektronischen Bauelement reduziert oder minimiert wird.

Auch hierbei kann ein optimaler Bereich der bildbasierten Dimension und/oder der bildbasiert bestimmten relativen Lage und/oder Orientierung zum entsprechenden elektronischen Bauelement existieren, wobei keine Anpassung des mindestens einen klebstoffspezifische Aufbringparameters erfolgt und das Qualitätskriterium erfüllt ist, wenn die aktuell bestimmte bildbasierte Dimension und/oder die aktuelle bildbasiert bestimmte relative Lage und/oder Orientierung zum entsprechenden elektronischen Bauelement in dem entsprechenden Bereich liegt. Weiter kann ein von dem optimalen Bereich verschiedener Grenzbereich der bildbasierten Dimension und/oder der bildbasiert bestimmten relativen Lage und/oder Orientierung zum entsprechenden elektronischen Bauelement existieren, wobei zwar eine Anpassung des mindestens einen klebstoffspezifische Aufbringparameters erfolgt, das Qualitätskriterium jedoch erfüllt ist, wenn die aktuell bestimmte bildbasierte Dimension und/oder die aktuelle bildbasiert bestimmte relative Lage und/oder Orientierung zum entsprechenden elektronischen Bauelement in dem entsprechenden Bereich liegt. Weiter kann ein von dem optimalen Bereich und dem Grenzbereich verschiedener Ausschussbereich der bildbasierten Dimension und/oder der bildbasiert bestimmten relativen Lage und/oder Orientierung zum entsprechenden elektronischen Bauelement existieren, wobei eine Anpassung des mindestens einen klebstoffspezifische Aufbringparameters erfolgt und das Qualitätskriterium nicht erfüllt ist, wenn die aktuell bestimmte bildbasierte Dimension und/oder die aktuelle bildbasiert bestimmte relative Lage und/oder Orientierung zum entsprechenden elektronischen Bauelement in dem entsprechenden Bereich liegt.

Weiter vorgeschlagen wird eine Vorrichtung zur Herstellung eines Wert- und/oder Sicherheitsdokuments mit einer Datenübertragungseinrichtung. Die Vorrichtung umfasst eine Aufbringeinrichtung für eine Antennenstruktur, eine Bestückungseinrichtung, eine Durchleuchtungseinrichtung und mindestens eine Auswerteeinrichtung. Die Datenübertragungseinrichtung umfasst mindestens eine Antennenstruktur und mindestens ein elektronisches Bauelement. Mittels der Aufbringeinrichtung für eine Antennenstruktur ist eine solche Antennenstruktur auf einen Trägerkörper aufbringbar. Mittels der Bestückungseinrichtung ist ein elektronisches Bauelement auf den Trägerkörper aufbringbar. Das elektronische Bauelement ist in einem Montagebereich über oder unter einem Abschnitt der Antennenstruktur anordenbar. Mittels der Durchleuchtungseinrichtung ist ein Durchleuchtungsbild von einem Bereich der Datenübertragungseinrichtung, in dem zumindest ein Abschnitt der Antennenstruktur und das elektronische Bauelement zumindest teilweise angeordnet sind, erzeugbar. Mittels der Auswerteeinrichtung sind zumindest ein Bildbereich, in dem der zumindest eine Abschnitt der Antennenstruktur oder ein Teil des Abschnitts abgebildet ist, und zumindest ein Bildbereich, in dem das elektronische Bauelement oder ein Teil des elektronischen Bauelements abgebildet ist, bestimmbar. Weiter ist eine relative Lage und/oder Orientierung der Antennenstruktur zum elektronischen Bauelement bildbasiert bestimmbar, wobei weiter ein lage- und/oder orientierungsabhängiges Qualitätskriterium auswertbar ist.

Die vorgeschlagene Vorrichtung ermöglicht hierbei in vorteilhafter Weise die Ausführung eines der vorhergehend erläuterten Verfahren. Selbstverständlich kann die Vorrichtung weiter eine Aufbringvorrichtung für einen Klebstoff umfassen. Weiter kann die Vorrichtung eine oder mehrere Steuereinrichtungen umfassen, wobei die Steuereinrichtung(en) in Abhängigkeit der relativen Lage und/oder Orientierung z. B. mindestens einen bauelementspezifischen Aufbringparameter verändern können. Mittels der Steuereinrichtung oder einer weiteren Steuereinrichtung kann in Abhängigkeit einer Dimension einer Klebstofffläche und/oder einer relativen Lage und/oder Orientierung einer Klebstofffläche zu einem korrespondierenden elektronischen Bauelement mindestens ein klebstoffspezifischer Aufbringparameter veränderbar sein.

Weiter kann die Vorrichtung eine Positioniereinrichtung zur Positionierung der Durchleuchtungseinrichtung umfassen. Alternativ oder kumulativ kann die Vorrichtung eine Positioniereinrichtung zur Positionierung des Trägerkörpers oder eines Bogens, der den Trägerkörper umfasst, umfassen. Mittels der Positioniereinrichtung(en) ist die Datenübertragungseinrichtung bzw. der Trägerkörper in einem Erfassungsbereich der Durchleuchtungseinrichtung anordenbar.

Weiter ist vorstellbar, dass in Abhängigkeit der relativen Lage und/oder Orientierung von Antennenstruktur und elektronischem Bauelement zueinander auch mindestens ein antennenspezifischer Aufbringparameter verändert werden kann.

Der antennenspezifische Aufbringparameter bezeichnet hierbei einen Parameter, der die Steuerung der Aufbringung der Antennenstruktur erlaubt. Wird beispielsweise ein Siebdruckverfahren zur Aufbringung der Antennenstruktur durchgeführt, so kann der mindestens eine antennenspezifische Aufbringparameter beispielsweise eine Siebart, eine Rakelgeschwindigkeit, eine Rakelhärte, einen Rakelwinkel, einen Siebabsprung, eine Gewebedicke, eine Emulsionsdicke oder eine Druckgeschwindigkeit bezeichnen. Der Siebabsprung bezeichnet hierbei einen Abstand zwischen einer Siebunterkante und einer Druckgutoberkante. Auch kann eine Stillstandsdauer während eines Druckverfahrens und/oder einer Trocknungsdauer und/oder einer Trocknungstemperatur, von der eine Qualität der Siebdruckpaste abhängig ist, den mindestens einen antennenspezifischen Aufbringparameter bilden. Insbesondere kann die Trocknungszeit und/oder die Trocknungstemperatur verändert werden, da sich die Antennenstruktur bei z.B. zu langer Trocknungszeit und/oder zu hoher Trocknungstemperatur plastisch verformt.

Die Erfindung wird anhand eines Ausführungsbeispiels näher erläutert. Die Figuren zeigen:
- Fig. 1: einen Trägerkörper mit einer Antennenstruktur in einer schematischen Draufsicht,
- Fig. 2: Verfahrensschritte zur Herstellung des Trägerkörpers mit der Antennenstruktur in einem schematischen Querschnitt, (a) Bereitstellen des Trägerkörpers; (b) Aufdrucken eines spiralförmigen Antennen-Leiterzuges einschließlich der Anschlusskontakte des Antennen-Leiterzuges auf den Trägerkörper; (c) Platzieren eines Chips über dem Antennen-Leiterzug,
- Fig. 3: einen Trägerkörper mit einer weiteren Antennenstruktur in einer schematischen Draufsicht,
- Fig. 4: ein schematisches Durchleuchtungsbild und
- Fig. 5: ein schematisches Blockschaltbild einer erfindungsgemäßen Vorrichtung.

Nachfolgend bezeichnen gleiche Bezugszeichen Elemente mit gleichen oder ähnlichen technischen Merkmalen.

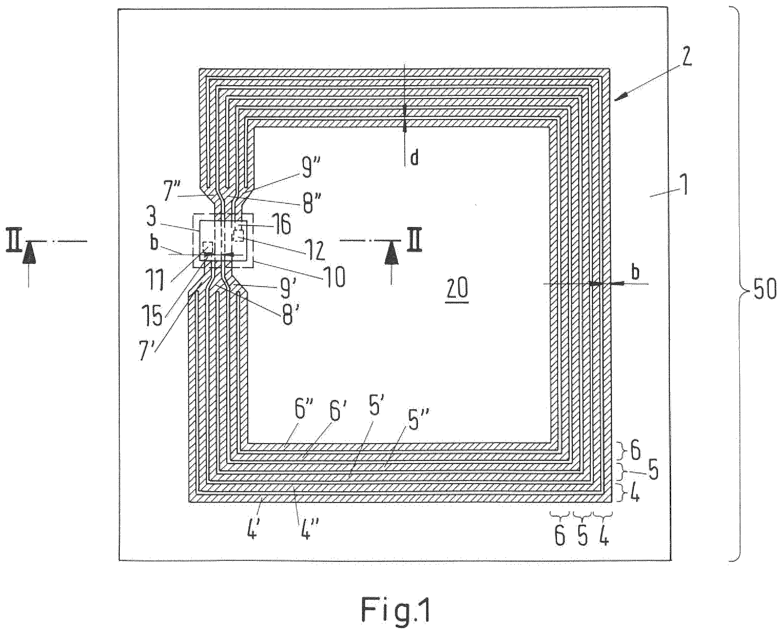

Die erfindungsgemäße kontaktlose Datenübertragungseinrichtung 50 gemäß Fig. 1 besteht aus einem Trägerkörper 1, auf dem eine Antennenstruktur 2 und ein elektronisches Bauelement 3, beispielsweise ein ungehäuster Chip, angeordnet sind. Der Chip 3 ist in einem Montagebereich 10 auf dem Trägerkörper 1 befestigt. Die als Antennen-Leiterzug ausgebildete Antennenstruktur 2 bildet ein Schaltkreiselement.

Der Trägerkörper 1 ist beispielsweise durch eine transparente (ungefüllte) Polycarbonatfolie mit einer Dicke von 80 µm, bevorzugt 100 µm, gebildet. Auf der Polycarbonatfolie befindet sich der durchgehende spiralförmige Antennen-Leiterzug mit zueinander parallelen Spiralwindungen 4, 5, 6. Jede der Spiralwindungen 4, 5, 6 bildet jeweils vier sich senkrecht zueinander erstreckende Windungsabschnitte, die eine Antenneninnenfläche 20 umschließen. Jede dieser Spiralwindungen 4, 5, 6 ist in jeweils zwei Spiralwindungsäste 4', 4" bzw. 5', 5" bzw. 6', 6" aufgespalten, sodass die Spiralwindungen 4, 5, 6 in diesen Bereichen zweispurig verlaufen. Eine erste Spiralwindung 4 spaltet sich an den Verzweigungsstellen 7', 7" in die Spiralwindungsäste 4', 4", eine zweite Spiralwindung 5 an den Verzweigungsstellen 8', 8" in die Spiralwindungsäste 5', 5" und eine dritte Spiralwindung 6 an den Verzweigungsstellen 9', 9" in die Spiralwindungsäste 6', 6" auf. Im Montagebereich 10 des Chips 3 verlaufen die Spiralwindungen 4, 5, 6 einspurig. Die Spiralwindungen 4, 5, 6 verlaufen außerhalb des Montagebereiches 10 in einem geringen Abstand d parallel zueinander. Dieser Abstand d kann beispielsweise 200 µm betragen. Innerhalb des Montagebereiches 10, d.h. unter dem Chip 3, kann der Abstand zwischen den einspurigen Abschnitten der Spiralwindungen 4, 5, 6 noch geringer sein, weil die Spiralwindungen hier zwischen den Kontaktstellen 11, 12 des Chips 3 hindurchgeführt werden müssen. Es ist selbstverständlich vorstellbar, dass die Spiralwindungen 4, 5, 6 auch vollständig einspurig ausgebildet sind.

Zur elektrischen Kontaktierung des Chips 3 ist dieser in Flip-Chip-Technik auf dem Trägerkörper 1 montiert. Hierzu sind dessen Kontaktstellen 11, 12 in Form von Kontakthöckern kongruent zu den Kontaktanschlüssen 15, 16 des Antennen-Leiterzuges ausgebildet, d.h. in einem Abstand, der dem Abstand der Kontaktstellen 11, 12 des Chips 3 entspricht. Der Chip 3 kann beispielsweise mittels eines anisotropen Klebers auf den Trägerkörper 1 aufgeklebt sein, um diesen dort mechanisch zu verankern und einen elektrischen Kontakt zwischen den Kontakthöckern 11, 12 und den Kontaktanschlüssen 15, 16 herzustellen.

Der Antennen-Leiterzug geht von einem ersten Kontaktanschluss 15 aus, der mit einem ersten Kontakthöcker 11 des Chips 3 in elektrischem Kontakt steht. Von dort aus erstreckt sich die erste Spiralwindung 4 entgegen dem Uhrzeigersinn über eine erste Verzweigungsstelle 7', an der sich aus der einspurigen ersten Spiralwindung 4 zwei erste Spiralwindungsäste 4', 4", die parallel zueinander verlaufen, bilden. Nach einem Umlauf (360°) vereinigen sich diese beiden ersten Spiralwindungsäste 4', 4" an einer zweiten Verzweigungsstelle 7" wieder miteinander, sodass die erste Spiralwindung 4 wieder einspurig wird. Der Antennen-Leiterzug 2 durchquert dann den Montagebereich 10 des Chips 3 und verläuft hierzu unter dem Chip 3. Nach dem Verlassen des Montagebereichs 10 verzweigt sich die nunmehr zweite Spiralwindung 5 an der ersten Verzweigungsstelle 8' unter Bildung einer zweispurigen zweiten Spiralwindung, die durch die beiden zweiten Spiralwindungsäste 5', 5" gebildet ist. Diese Äste 5', 5" verlaufen wiederum parallel zueinander und im Gegenuhrzeigersinn parallel zu den ersten Spiralwindungsästen 4', 4" und zwar innerhalb der von diesen gebildeten Antennenfläche 20. Nach einem vollständigen Umlauf der zweiten Spiralwindungsäste 5', 5" vereinigen sich diese an der zweiten Verzweigungsstelle 8" wieder unter Bildung der einspurigen zweiten Spiralwindung 5. Nach dem Durchqueren des Montagebereichs 10 unter dem Chip 3 geht die zweite Spiralwindung 5 in die dritte Spiralwindung 6 über, die sich an der ersten Verzweigungsstelle 9' in zwei dritte Spiralwindungsäste 6', 6" aufspaltet, wobei eine zweispurige dritte Spiralwindung gebildet wird. Nach einem erneuten vollständigen Umlauf innerhalb der durch die ersten Spiralwindungsäste 4', 4" und die zweiten Spiralwindungsäste 5', 5" gebildeten Antennenfläche 20 erreicht die dritte zweispurige Spiralwindung 6 die zweite Verzweigungsstelle 9", wo sich die beiden Äste 6', 6" wieder miteinander vereinigen und die einspurige dritte Spiralwindung 6 bilden. Diese endet im Montagebereich 10 unter dem Chip 3 in einem zweiten Anschlusskontakt 16, der mit einer durch einen Kontakthöcker gebildeten Kontaktstelle 12 des Chips elektrisch kontaktiert ist.

Die Breite b der Spiralwindungsäste 4', 4", 5', 5", 6', 6" ist über deren gesamten Verlauf gleich bleibend und genauso groß wie die Breite der einspurigen Abschnitte der Spiralwindungen 4, 5, 6 im Montagebereich 10 unter dem Chip 3 ausgebildet. Diese Breite b beträgt beispielsweise 250 µm.

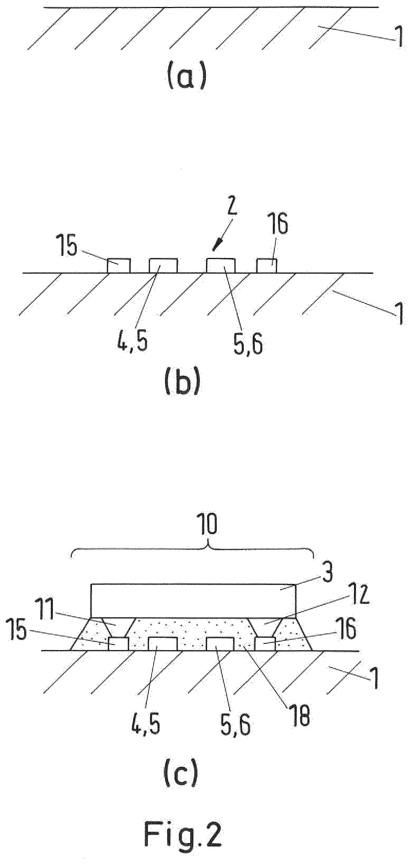

In Fig. 2 ist das Verfahren zur Herstellung der erfindungsgemäßen Datenübertragungseinrichtung 50 von Fig. 1 in einer schematischen Darstellung in Schnitten gemäß II - II (siehe Fig. 1) wiedergegeben.

In einem ersten Verfahrensschritt wird zunächst der Trägerkörper 1 bereitgestellt (Fig. 2a). In einem zweiten Verfahrensschritt wird die Antennenstruktur 2, bestehend aus den Spiralwindungen 4, 5, 6 und den Anschlusskontakten 15, 16 auf dem Trägerkörper 1 erzeugt, beispielsweise durch Aufdrucken der Antennenstruktur mit einer Silber-Leitpaste mittels Siebdruck (Fig. 2b).

In einem dritten Verfahrensschritt wird Chip 3 montiert (Fig. 2c). Der Chip 3 weist an seinen Kontaktstellen 11, 12 Kontakthöcker, beispielsweise aus Kupfer/Nickel/Gold, auf, die mit den Anschlusskontakten 15, 16 des Antennen-Leiterzuges, in elektrischen Kontakt gebracht sind. Hierzu ist der Chip 3 mit den Kontakthöckern 11, 12 auf die Anschlusskontakte 15, 16 aufgesetzt. Für die Chipmontage wird im Montagebereich 10 zunächst ein anisotroper Leitkleber 18 in dosierter Menge beispielsweise mit einem Dispenser auf den Trägerkörper 1 und den Antennen-Leiterzug 2 aufgebracht. Dieser Leitkleber 18 enthält sehr kleine leitfähige Metallpartikel, die einen elektrischen Kontakt zwischen den Kontakthöckern 11, 12 des Chips und den Anschlusskontakten 15, 16 herstellen. Außerdem fixiert der Leitkleber 18 den Chip 3 mechanisch auf dem Trägerkörper 1.

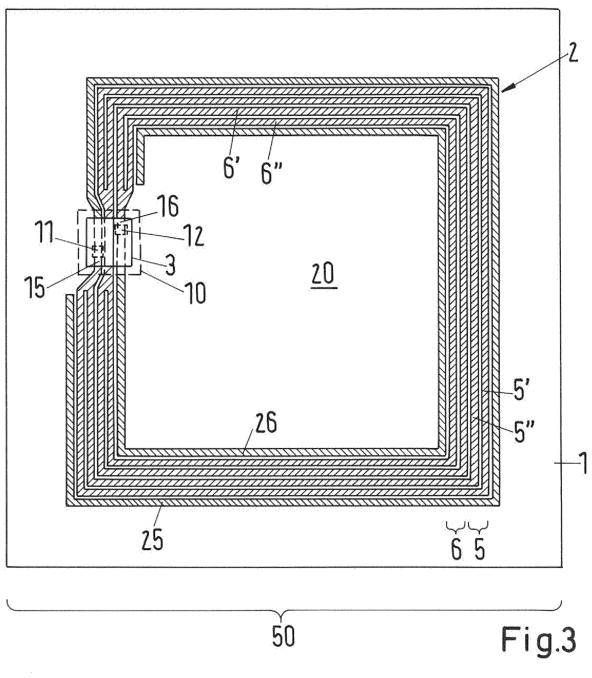

In Fig. 3 ist eine zweite Ausführungsform der erfindungsgemäßen Datenübertragungseinrichtung 50 dargestellt. Diese unterscheidet sich von der in Fig. 1 dargestellten ersten Ausführungsform dadurch, dass der Antennen-Leiterzug zum einen zwei Spiralwindungen 5, 6 anstelle von drei Spiralwindungen aufweist und dass zum anderen zusätzlich zwei Blind-Leiterzüge 25, 26 vorgesehen sind. Der Antennen-Leiterzug und die Blind-Leiterzüge 25, 26 bilden zusammen das Schaltkreiselement der kontaktlosen Datenübertragungseinrichtung 50.

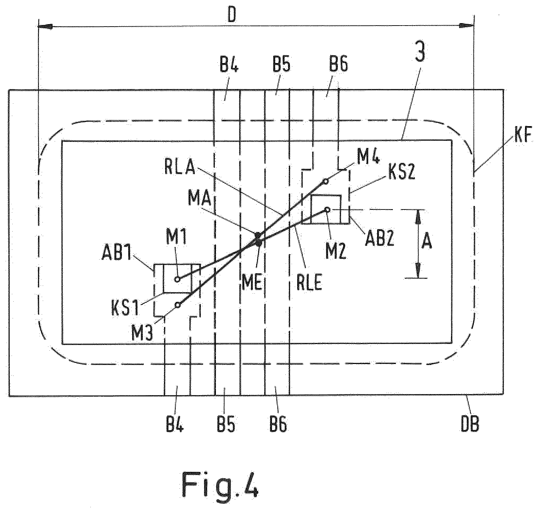

In Fig. 4 ist ein schematisches Durchleuchtungsbild DB dargestellt. Das Durchleuchtungsbild DB bildet hierbei den Montagebereich 10 (siehe Fig. 1) ab. Hierbei ist dargestellt, dass das Durchleuchtungsbild DB die Spiralwindungen 4, 5, 6 in Bildbereichen B4, B5, B6 abbildet. Weiter dargestellt ist ein Bildbereich KF, in dem eine Klebstofffläche abgebildet ist. Weiter dargestellt ist ein erster Bildbereich KS1, in dem eine erste Kontaktstelle des elektronischen Bauelements 3 abgebildet ist. Auch dargestellt ist ein zweiter Bildbereich KS2, in dem eine zweite Kontaktstelle des elektronischen Bauelements 3 abgebildet ist. Weiter dargestellt ist ein dritter Bildbereich AB1, in dem ein erster Anschlussbereich der Antennenstruktur 2, insbesondere der ersten Spiralwindung 4, abgebildet ist. Entsprechend ist ein vierter Bildbereich AB2 dargestellt, in dem ein zweiter Anschlussbereich der Antennenstruktur 2, insbesondere der dritten Spiralwindung 6, abgebildet ist.

Diese Bildbereiche KS1, KS2, AB1, AB2 können bildbasiert bestimmt werden. Hierzu können beispielsweise geeignete Segmentierverfahren, insbesondere ein kantenfunktionsbasiertes Segmentierverfahren durchgeführt werden.

Nachfolgend wird ein Bildursprung als die linke obere Ecke des Durchleuchtungsbildes DB definiert. Zeilen des Durchleuchtungsbildes DB sind hierbei in aufsteigender Zeilenreihenfolge vertikal untereinander in Bezug auf den Bildursprung angeordnet. Spalten des Durchleuchtungsbildes DB sind hierbei in aufsteigender Spaltenzahl in horizontaler Richtung nebeneinander angeordnet. Eine Kantendetektion kann beispielsweise durchgeführt werden, indem das Durchleuchtungsbild oder ein als Untersuchungsbereich bezeichneter Teilbereich des Durchleuchtungsbildes DB zeilenweise durchlaufen wird, wobei ein Intensitätswertverlauf entlang der Zeile ausgewertet wird. Hierbei kann eine Kante detektiert werden, falls ein Intensitätswert unter einen vorbestimmten Schwellwert fällt oder über einen vorbestimmten Intensitätswert steigt und/oder eine erste Ableitung des Intensitätswertverlaufes ein Maximum und/oder eine zweite Ableitung des Intensitätswertverlaufs einen Nulldurchgang aufweist. Auf diese Weise können beispielsweise die vertikal verlaufenden Ränder der Bildbereiche KS1, KS2, AB1, AB2 bestimmt werden.

Weiter kann das Durchleuchtungsbild DB oder ein Untersuchungsbereich spaltenweise in ansteigender Zeilenzahl durchlaufen werden, wodurch horizontal verlaufende Ränder der Bildbereiche KS1, KS2, AB1, AB2 detektiert werden können. Hierbei können die gleichen Kriterien zur Kantendetektion wie bei der vorhergehend erläuterten zeilenbasierten Kantendetektion ausgewertet werden.

Auf diese Weise können somit die horizontal und vertikal verlaufenden Ränder der Bildbereiche KS1, KS2, AB1, AB2 bestimmt werden. Von diesen Rändern eingeschlossene Bildpunkte (Pixel) bilden somit die dargestellten Bildbereiche KS1, KS2, AB1, AB2. Weiter können Mittelpunkte M1, M2, M3, M4 bestimmt werden, wobei M1 einen Mittelpunkt des Bildbereiches KS1, in dem die erste Kontaktstelle abgebildet ist, bezeichnet. Der Mittelpunkt M2 bezeichnet einen Mittelpunkt des Bildbereiches KS2, in dem die zweite Kontaktstelle abgebildet ist. Der Mittelpunkt M3 bezeichnet einen Mittelpunkt des Bildbereiches AB1, in dem der erste Anschlussbereich abgebildet ist. Der Mittelpunkt M4 bezeichnet einen Bildbereich AB2, in dem der zweite Anschlussbereich abgebildet ist. Weiter kann eine Referenzlinie RLE des elektronischen Bauelements 3 und eine Referenzlinie RLA der Antennenstruktur 2 bestimmt werden, wobei die Referenzlinie RLE den ersten und den zweiten Mittelpunkt M1, M2 verbindet und die Referenzlinie RLA der Antennenstruktur 2 den dritten und den vierten Mittelpunkt M3, M4 verbindet.

Weiter kann ein resultierender Mittelpunkt ME des elektronischen Bauelements 3 und ein resultierender Mittelpunkt MA der Antennenstruktur 2 bestimmt werden, wobei die resultierenden Mittelpunkte ME, MA jeweils Mittelpunkte der Referenzlinien RLE, RLA sind. Weiter können Pixelkoordinaten dieser resultierenden Mittelpunkte ME, MA bestimmt werden. In Abhängigkeit einer Pixeldifferenz kann dann eine relative Lage der Antennenstruktur 2 zum elektronischen Bauelement 3 bestimmt werden. Auch kann ein Winkel bestimmt werden, den die Referenzlinie RLE des elektronischen Bauelements 3 mit der Referenzlinie RLA der Antennenstruktur 2 einschließt. In Abhängigkeit dieses Winkels kann eine relative Orientierung der Antennenstruktur 2 zum elektronischen Bauelement 3 bestimmt werden.

Weiter dargestellt ist ein bildbasierter Abstand A zwischen dem ersten und dem zweiten Mittelpunkt M1, M2. Dieser bildbasierte Abstand A entspricht einem vorbekannten tatsächlichen Abstand, der beispielsweise in Mikrometern angegeben ist, der Mittelpunkte der Kontaktstellen des elektronischen Bauelements. In Abhängigkeit des Abstandes A und des vorbekannten tatsächlichen Abstands kann dann ein Abbildungsmaßstab bzw. ein Skalierungsfaktor bestimmt werden. Somit kann ein tatsächlicher Abstand der resultierenden Mittelpunkte ME, MA zueinander in Abhängigkeit dieses Abbildungsmaßstabes bestimmt werden.

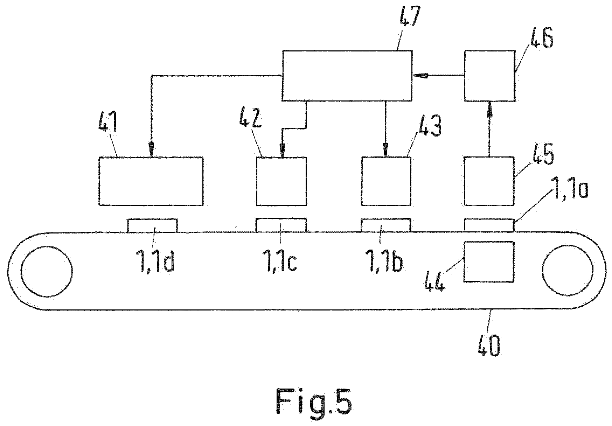

Wird dieser tatsächliche Abstand zwischen den resultierenden Mittelpunkten ME, MA betragsmäßig größer als ein zulässiger Abstand, so kann ein bauelementspezifischer Positionierparameter einer Bestückungseinrichtung 43 (siehe Fig. 5) derart verändert werden, dass das elektronische Bauelement 3 im Herstellungsprozess nachfolgender Wert- und/oder Sicherheitsdokumenten derart positioniert wird, dass die unerwünschte Abweichung reduziert oder minimiert wird.

In Fig. 4 ist ausschließlich ein Abstand A in vertikaler Richtung dargestellt. Selbstverständlich kann auch ein Abstand in horizontaler Richtung zwischen dem ersten und dem zweiten Mittelpunkt M1, M2 bestimmt werden. Somit kann der Abbildungsmaßstab auch in Abhängigkeit dieses horizontalen Abstandes bestimmt werden.

Weiter dargestellt ist eine bildbasierte Dimension des Bildbereiches KF, in dem die Klebstofffläche abgebildet ist. Die Dimension D entspricht hierbei einer maximalen Breite, also einer maximalen Dimension in horizontaler Richtung, des Bildbereiches KF. Ist ein Abbildungsmaßstab bekannt, kann eine tatsächliche maximale Breite der Klebstofffläche bestimmt werden. In Abhängigkeit dieser tatsächlichen Breite kann ein klebstoffspezifischer Aufbringparameter, beispielsweise eine Menge des aufzubringenden Klebstoffes, derart verändert werden, dass eine Abweichung zwischen einer gewünschten maximalen Breite und einer tatsächlichen maximalen Breite reduziert oder minimiert wird.

In Fig. 5 ist eine Vorrichtung zur Herstellung eines Wert- und/oder Sicherheitsdokuments mit einer Datenübertragungseinrichtung dargestellt. Die Vorrichtung umfasst eine Siebdruckeinrichtung 41 zur Aufbringung einer Antennenstruktur 2 auf einen Trägerkörper 1 (siehe z.B. Fig. 1). Dargestellt ist hierbei ein erster Trägerkörper 1a, ein zweiter Trägerkörper 1b, ein dritter Trägerkörper 1c und ein vierter Trägerkörper 1d, die auf einem Transportband 40 der Vorrichtung angeordnet sind. Hierbei ist dargestellt, dass sowohl auf dem ersten Trägerkörper 1a als auch auf dem zweiten und dem dritten Trägerkörper 1b, 1c bereits eine Antennenstruktur mittels eines Siebdruckverfahrens aufgebracht ist.

Weiter umfasst die Vorrichtung eine Bestückungseinrichtung 43 zur Aufbringung eines elektronischen Bauelements 3 (siehe z.B. Fig. 1). Weiter umfasst die Vorrichtung eine Aufbringvorrichtung 42 zur Aufbringung von Klebstoff. Hierbei ist dargestellt, dass auf den zweiten Trägerkörper 1b ein nicht dargestelltes elektronisches Bauelement aufgebracht wird. Auf den dritten Trägerkörper 1c wird Klebstoff aufgebracht. Weiter umfasst die Vorrichtung eine Röntgeneinrichtung, die eine Strahlenquelle 44 und einen Detektor 45 umfasst. Weiter umfasst die Vorrichtung eine Auswerteeinrichtung 46 und eine Steuereinrichtung 47. Die Auswerteeinrichtung 46 kann hierbei bildbasiert eine relative Lage und/oder Orientierung, wie beispielsweise zu Fig. 4 bereits erläutert, einer Antennenstruktur 2 zu einem elektronischen Bauelement 3, die beide auf dem ersten Trägerkörper 1a angeordnet sind, bestimmen. Auch kann die Auswerteeinrichtung 46 bildbasiert eine Dimension D (siehe Fig. 4) der auf den ersten Trägerkörper 1a bereits aufgebrachten Klebstofffläche bestimmen. Diese Parameter kann die Auswerteeinrichtung 46 datentechnisch an die Steuereinrichtung 47 übertragen. Diese kann in Abhängigkeit der bestimmten Parameter mindestens einen Aufbringparameter der Bestückungseinrichtung 43 und/oder der Siebdruckeinrichtung 41 verändern. Weiter kann die Steuereinrichtung 47 mindestens einen klebstoffspezifischen Aufbringparameter der Aufbringeinrichtung 42 verändern.

Es ist auch möglich, dass mittels der Auswerteeinrichtung 46 zumindest ein Bildbereich bestimmbar ist, in dem zumindest ein Abschnitt einer Antennenstruktur 2 abgebildet ist. Weiter kann mittels der Auswerteeinrichtung 46 mindestens ein Parameter einer Intensitätswertverteilung in diesem zumindest einen Bildbereich bestimmt werden. Weiter kann ein parameterabhängiges Qualitätskriterium ausgewertet werden. Beispielsweise kann/können ein Mittelwert und/oder eine Standardabweichung der Intensitätswertverteilung in dem Bildbereich, der zumindest ein Teil der Antennenstruktur 2 abbildet, bestimmt werden. Diese erlauben Rückschluss auf eine Qualität der Antennenstruktur 2, insbesondere eine Schichtdicke der Antennenstruktur 2. Dem entsprechend kann die Steuereinrichtung 47 mindestens einen antennenspezifischen Aufbringparameter der Siebdruckeinrichtung 41 derart abändern, damit eine gewünschte Qualität der Antennenstruktur 2 erreicht wird.

Selbstverständlich ist es auch vorstellbar, dass zwar eine datentechnische Verbindung zwischen der Auswerteeinrichtung 46 und der Steuereinrichtung 47 besteht, jedoch die Trägerkörper 1a, 1b, 1c, 1d nicht auf einem gemeinsamen Transportband 40 durch die Siebdruckeinrichtung 41, die Aufbringvorrichtung 42, die Bestückungseinrichtung 43 und die Röntgeneinrichtung transportiert werden. Z.B können die Siebdruckeinrichtung 41, die Aufbringvorrichtung 42, die Bestückungseinrichtung 43 und die Röntgeneinrichtung zumindest teilweise in voneinander entkoppelten und somit nicht durch ein einziges Transportband 40 verbundenen Abschnitten einer Fertigungsstraße angeordnet sein.

## Patentansprüche

1. Verfahren zur Herstellung eines Wert- und/oder Sicherheitsdokuments mit einer Datenübertragungseinrichtung, wobei die Datenübertragungseinrichtung mindestens eine Antennenstruktur (2) und mindestens ein elektronisches Bauelement (3) umfasst, umfassend folgende Verfahrensschritte:
- Bereitstellen eines Trägerkörpers (1, 1a, 1b, 1c, 1d),
- Aufbringen einer Antennenstruktur (2) auf den Trägerkörper (1, 1a, 1b, 1c), **gekennzeichnet durch** folgende weitere Verfahrensschritte:
- Aufbringen eines elektronischen Bauelements (3) auf den Trägerkörper (1, 1a, 1b),
- Erzeugen eines Durchleuchtungsbildes (DB) von einem Bereich der Datenübertragungseinrichtung, in dem zumindest ein Abschnitt der Antennenstruktur (2) und das elektronische Bauelement (3) zumindest teilweise angeordnet sind,
- Bestimmen zumindest eines Bildbereichs, in dem der zumindest eine Abschnitt der Antennenstruktur (2) oder ein Teil des Abschnitts der Antennenstruktur (2) abgebildet ist,
- Bestimmen zumindest eines Bildbereichs, in dem das elektronische Bauelement (3) oder ein Teil des elektronischen Bauelements (3) abgebildet ist,
- bildbasiertes Bestimmen einer relativen Lage und/oder Orientierung der Antennenstruktur (2) zum elektronischen Bauelement (3), wobei das bildbasierte Bestimmen der relativen Lage und/oder Orientierung ein Bestimmen der relativen Lage und/oder Orientierung in einem Bildkoordinatensystem bezeichnet,
- Auswerten eines lage- und/oder orientierungsabhängigen Qualitätskriteriums.

2. Verfahren nach Anspruch 1, **dadurch gekennzeichnet, dass** das elektronische Bauelement (3) mindestens zwei Kontaktstellen aufweist, wobei ein erster Bildbereich (KS1) bestimmt wird, in dem eine erste Kontaktstelle abgebildet ist, wobei ein zweiter Bildbereich (KS2) bestimmt wird, in dem eine zweite Kontaktstelle abgebildet ist, wobei eine bildbasierte Lage und/oder Orientierung des elektronischen Bauelements (3) in Abhängigkeit einer Lage des ersten Bildbereichs (KS1) und des zweiten Bildbereichs (KS2) bestimmt wird, wobei die relative Lage und/oder Orientierung der Antennenstruktur (2) zum elektronischen Bauelement (3) in Abhängigkeit der bildbasierten Lage und/oder Orientierung des elektronischen Bauelements (3) bestimmt wird.

3. Verfahren nach einem der Ansprüche 1 oder 2, **dadurch gekennzeichnet, dass** die Antennenstruktur (2) mindestens zwei Anschlussbereiche aufweist, wobei ein dritter Bildbereich (AB1) bestimmt wird, in dem ein erster Anschlussbereich abgebildet ist, wobei ein vierter Bildbereich (AB2) bestimmt wird, in dem ein zweiter Anschlussbereich abgebildet ist, wobei eine bildbasierte Lage und/oder Orientierung der Antennenstruktur (2) in Abhängigkeit einer Lage des dritten Bildbereichs (AB1) und des vierten Bildbereichs (AB2) bestimmt wird, wobei die relative Lage und/oder Orientierung der Antennenstruktur (2) zum elektronischen Bauelement (3) in Abhängigkeit der bildbasierten Lage und/oder Orientierung der Antennenstruktur (2) bestimmt wird.

4. Verfahren nach einem der Ansprüche 2 bis 3, **dadurch gekennzeichnet, dass** Mittelpunkte (M1, M2) der Bildbereiche (KS1, KS2), in die die Kontaktstellen abgebildet sind, und/oder Mittelpunkte (M3, M4) der Bildbereiche (AB1, AB2), in die die Anschlussbereiche abgebildet sind, bestimmt werden, wobei bildbasiert die relative Lage und/oder Orientierung der Antennenstruktur (2) zum elektronischen Bauelement (3) in Abhängigkeit der bestimmten Mittelpunkte (M1, M2, M3, M4) bestimmt wird.

5. Verfahren nach einem der Ansprüche 1 bis 4, **dadurch gekennzeichnet, dass** das Durchleuchtungsbild (DB) derart erzeugt wird, dass zusätzlich mindestens eine Referenzstruktur mit vorbekannten geometrischen Eigenschaften abgebildet wird, wobei in Abhängigkeit der vorbekannten Eigenschaften ein Zusammenhang zwischen bildpunktbasierten und tatsächlichen geometrischen Eigenschaften bestimmt wird, wobei in Abhängigkeit des Zusammenhangs eine tatsächliche relative Lage und/oder Orientierung der Antennenstruktur (2) zum elektronischen Bauelement (3) bestimmt wird.

6. Verfahren nach Anspruch 5, **dadurch gekennzeichnet, dass** die Referenzstruktur durch die zwei Kontaktstellen des elektronischen Bauelements (3) gebildet wird.

7. Verfahren nach einem der Ansprüche 1 bis 6, **dadurch gekennzeichnet, dass** zusätzlich ein Bildbereich (KF) bestimmt wird, in dem eine Klebstofffläche abgebildet ist, wobei der Klebstoff die Antennenstruktur (2) und das elektronische Bauelement (3) verbindet, wobei zumindest eine bildbasierte Dimension (D) der Klebstofffläche und/oder eine relative Lage und/oder Orientierung der Klebstofffläche zum elektronischen Bauelement (3) bestimmt wird, wobei ein dimensions- und/oder lage-und/oder orientierungsabhängiges Qualitätskriterium ausgewertet wird.

8. Verfahren nach einem der Ansprüche 1 bis 7, **dadurch gekennzeichnet, dass** das Verfahren folgende Verfahrensschritte umfasst:
- Aufbringen eines ersten elektronischen Bauelements (3) auf einen ersten Trägerkörper (1, 1a) in Abhängigkeit mindestens eines bauelementspezifischen Aufbringparameters,
- Bereitstellen eines weiteren Trägerkörpers,
- Aufbringen einer weiteren Antennenstruktur auf den weiteren Trägerkörper,
- Aufbringen eines weiteren elektronischen Bauelements auf den weiteren Trägerkörper in Abhängigkeit mindestens eines bauelementspezifischen Aufbringparameters, wobei der bauelementspezifische Aufbringparameter in Abhängigkeit der relativen Lage und/oder Orientierung einer ersten Antennenstruktur (2) auf dem ersten Trägerkörper (1, 1a) zu einem ersten elektronischen Bauelement (3) auf dem ersten Trägerkörper (1, 1a) bestimmt wird.

9. Verfahren nach Anspruch 8, **dadurch gekennzeichnet, dass** zusätzlich auf den ersten Trägerkörper (1, 1a) ein Klebstoff in Abhängigkeit eines klebstoffspezifischen Aufbringparameters aufgebracht wird, wobei zusätzlich ein Bildbereich (KF) bestimmt wird, in dem eine erste Klebstofffläche abgebildet ist, wobei der Klebstoff die erste Antennenstruktur (2) und das erste elektronische Bauelement (3) verbindet, wobei zumindest eine bildbasierte Dimension (D) der ersten Klebstofffläche und/oder eine relative Lage und/oder Orientierung der ersten Klebstofffläche zum ersten elektronischen Bauelement (3) bestimmt wird,
wobei zusätzlich auf den weiteren Trägerkörper ein Klebstoff in Abhängigkeit des mindestens einen klebstoffspezifischen Aufbringparameters aufgebracht wird, wobei der klebstoffspezifische Aufbringparameter in Abhängigkeit der Dimension (D) der erste Klebstofffläche und/oder der relative Lage und/oder Orientierung der ersten Klebstofffläche zum ersten elektronischen Bauelement (3) bestimmt wird.

10. Vorrichtung zur Herstellung eines Wert- und/oder Sicherheitsdokuments mit einer Datenübertragungseinrichtung, umfassend eine Aufbringeinrichtung, eine Bestückungseinrichtung (43), eine Durchleuchtungseinrichtung und mindestens eine Auswerteeinrichtung (46), wobei die Datenübertragungseinrichtung mindestens eine Antennenstruktur (2) und mindestens ein elektronisches Bauelement (3) umfasst, wobei mittels der Aufbringeinrichtung eine Antennenstruktur (2) auf einen Trägerkörper (1, 1a, 1b, 1c, 1d) aufbringbar ist, wobei mittels der Bestückungseinrichtung (43) ein elektronisches Bauelement (3) auf den Trägerkörper (1, 1a, 1b, 1c, 1d) aufbringbar ist, wobei mittels der Durchleuchtungseinrichtung ein Durchleuchtungsbild (DB) von einem Bereich der Datenübertragungseinrichtung, in dem zumindest ein Abschnitt der Antennenstruktur (2) und das elektronische Bauelement (3) zumindest teilweise angeordnet sind, erzeugbar ist, wobei mittels der Auswerteeinrichtung (46) zumindest ein Bildbereich, in dem der zumindest eine Abschnitt der Antennenstruktur (2) oder ein Teil des Abschnitts abgebildet ist, und zumindest ein Bildbereich, in dem das elektronische Bauelement (3) oder ein Teil des elektronischen Bauelements (3) abgebildet ist, bestimmbar ist, wobei eine relative Lage und/oder Orientierung der Antennenstruktur (2) zum elektronischen Bauelement (3) bildbasiert bestimmbar ist, wobei das bildbasierte Bestimmen der relativen Lage und/oder Orientierung ein Bestimmen der relativen Lage und/oder Orientierung in einem Bildkoordinatensystem bezeichnet, wobei ein lage- und/oder orientierungsabhängiges Qualitätskriterium auswertbar ist.

## Claims

1. Method for producing a value document and/or a security document having a data transmission device, wherein the data transmission device comprises at least one antenna structure (2) and at least one electronic component (3), comprising the following method steps:
- providing a support element (1, 1a, 1b, 1c, 1d),
- placing an antenna structure (2) onto the support element (1, 1a, 1b, 1c),
**characterised by** the following further method steps:
- placing an electronic component (3) onto the support element (1, 1a, 1b),
- generating a fluoroscopic image (DB) of a region of the data transmission device, in which at least one portion of the antenna structure (2) and the electronic component (3) are at least partially arranged,
- determining at least one image region in which at least one portion of the antenna structure (2) or a part of the portion of the antenna structure (2) is imaged,
- determining at least one image region in which the electronic component (3) or a part of the electronic component (3) is imaged,
- image-based determining of a position and/or orientation of the antenna structure (2) relative to the electronic component (3), wherein the image-based determining of the relative position and/or orientation designates a determination of the relative position and/or orientation in an image coordinate system,
- evaluating a quality criterion depending on the position and/or orientation.

2. Method according to claim 1, **characterised in that** the electronic component (3) comprises at least two contact points, wherein a first image region (KS1) is determined, in which the first contact point is imaged, wherein a second image region (KS2) is determined, in which a second contact point is imaged, wherein an image-based position and/or orientation of the electronic component (3) is determined as a dependency of a position of the first image region (KS1) and of the second image region (KS2), wherein the position and/or orientation of the antenna structure (2) relative to the electronic component (3) is determined as a dependency of the image-based position and/or orientation of the electronic component (3).

3. Method according to any one of claims 1 or 2, **characterised in that** the antenna structure (2) comprises at least two connection regions, wherein a third image region (AB1) is determined, in which a first connection region is imaged, wherein a fourth image region (AB2) is determined, in which a second connection region is imaged, wherein an image-based position and/or orientation of the antenna structure (2) is determined as a dependency of a position of the third image region (AB1) and of the fourth image region (AB2), wherein the position and/or orientation of the antenna structure (2) relative to the electronic component (3) is determined as a dependency of the image-based position and/or orientation of the antenna structure (2).

4. Method according to any one of claims 2 to 3, **characterised in that** mid-points (M1, M2) are determined of the image regions (KS1, KS2) into which the contact points are imaged, and/or mid-points (M3, M4) of the image regions (AB1, AB2) into which the connection regions are imaged, wherein, image-based, the relative position and/or orientation of the antenna structure (2) relative to the electronic component (3) is determined as a dependency of the determined mid-points (M1, M2, M3, M4).

5. Method according to any one of claims 1 to 4, **characterised in that** the fluoroscopic image (DB) is produced in such a way that, additionally, at least one reference structure with previously known geometric properties is imaged, wherein, as a dependency of the previously known properties, a relationship between image-point-based and actual geometrical properties is determined, wherein, as a dependency of the relationship, an actual position and/or orientation of the antenna structure (2) relative to the electronic component (3) is determined.

6. Method according to claim 5, **characterised in that** the reference structure is formed by the two contact points of the electronic component (3).

7. Method according to any one of claims 1 or 6, **characterised in that**, additionally, an image region (KF) is determined, in which an adhesive surface is imaged, wherein the adhesive connects the antenna structure (2) and the electronic component (3), wherein at least one image-based dimension (D) of the adhesive surface and/or a position and/or orientation of the adhesive surface relative to the electronic component (3) is determined, wherein a dimension-dependent and/or position-dependent and/or orientation-dependent quality criterion is evaluated.

8. Method according to any one of claims 1 to 7, **characterised in that** the method comprises the following method steps:
- placing a first electronic component (3) onto a first support element (1, 1a), as a dependency of at least one component-specific placement parameter,
- providing a further support element,
- placing a further antenna structure onto the further support element,
- placing a further electronic component onto the further support element as a dependency of at least one component-specific placement parameter, wherein the component-specific placement parameter is determined as a dependency of the position and/or orientation of a first antenna structure (2) on the first support element (1, 1a) relative to a first electronic component (3) on the first support element (1, 1a).

9. Method according to claim 8, **characterised in that**, additionally, an adhesive is placed onto the first support element (1, 1a), as a dependency of an adhesive-specific placement parameter, wherein, additionally, an image region (KF) is determined, in which a first adhesive surface is imaged, wherein the adhesive connects the first antenna structure (2) and the first electronic component (3), wherein at least one image-based dimension (D) of the first adhesive surface and/or a position and/or orientation of the first adhesive surface relative to the first electronic component (3) is determined,
wherein, additionally, an adhesive is placed onto the further support element, as a dependency of the at least one adhesive-specific placement parameter, wherein the adhesive-specific placement parameter is determined as a dependency of the dimension (D) of the first adhesive surface and/or of the position and/or orientation of the first adhesive surface relative to the first electronic component (3).

10. Device for producing a value document and/or security document with a data transmission device, comprising a placement device, a fitting device (43), a fluoroscopic imaging device, and at least one evaluation device (46), wherein the data transmission device comprises at least one antenna structure (2) and at least one electronic component (3), wherein, by means of the placement device, an antenna structure (2) can be placed onto a support element (1, 1a, 1b, 1c, 1d), wherein, by means of the fitting device (43), an electronic component (3) can be placed onto the support element (1, 1a, 1b, 1c, 1d), wherein, by means of the fluoroscopic imaging device, a fluoroscopic image (DB) of a region of the data transmission device can be produced, in which at least one portion of the antenna structure (2) and the electronic component (3) are at least partially arranged, wherein, by means of the evaluation device (46), at least one image region can be determined, in which the at least one portion of the antenna structure (2) or a part of the portion is imaged, and at least one image region can be determined, in which the electronic component (3) or a part of the electronic component (3) is imaged, wherein a position and/or orientation of the antenna structure (2) relative to the electronic component (3) can be determined image-based, wherein the image-based determination of the relative position and/or orientation designates a determination of the relative position and/or orientation in an image coordinate system, wherein a position-dependent and/or orientation-dependent quality criterion can be evaluated.

## Revendications

1. Procédé de fabrication d'un document de valeur et/ou de sécurité avec un dispositif de transmission de données, dans lequel le dispositif de transmission de données comporte au moins une structure d'antenne (2) et au moins un composant électronique (3), comportant les étapes de procédé suivantes :
- la fourniture d'un corps porteur (1, 1a, 1b, 1e, 1d),
- le dépôt d'une structure d'antenne (2) sur le corps porteur (1, 1a, 1b, 1c),
**caractérisé par** les autres étapes de procédé suivantes :
- le dépôt d'un composant électronique (3) sur le corps porteur (1, 1a, 1b),
- la génération d'une image radioscopique (DB) d'une zone du dispositif de transmission de données dans laquelle au moins une portion de la structure d'antenne (2) et le composant électronique (3) sont disposés au moins en partie,
- la détermination d'au moins une zone d'image dans laquelle l'au moins une portion de la structure d'antenne (2) ou une partie de la portion de la structure d'antenne (2) est reproduite,
- la détermination d'au moins une zone d'image dans laquelle le composant électronique (3) ou une partie du composant électronique (3) est reproduit,
- la détermination à base d'image d'une position et/ou d'une orientation relatives de la structure d'antenne (2) par rapport au composant électronique (3), dans lequel la détermination à base d'image de la position et/ou de l'orientation relatives désigne une détermination de la position et/ou de l'orientation relatives dans un système de coordonnées d'image,
- l'évaluation d'un critère de qualité dépendant de la position et/ou de l'orientation.

2. Procédé selon la revendication 1, **caractérisé en ce que** le composant électronique (3) comprend au moins deux points de contact, dans lequel est déterminée une première zone d'image (KS1) dans laquelle un premier point de contact est reproduit, dans lequel est déterminée une deuxième zone d'image (KS2) dans laquelle un second point de contact est reproduit, dans lequel une position et/ou une orientation à base d'image du composant électronique (3) est déterminée en fonction d'une position de la première zone d'image (KS1) et de la deuxième zone d'image (KS2), dans lequel la position et/ou l'orientation relatives de la structure d'antenne (2) par rapport au composant électronique (3) est déterminée en fonction de la position et/ou de l'orientation à base d'image du composant électronique (3) .

3. Procédé selon l'une quelconque des revendications 1 ou 2, **caractérisé en ce que** la structure d'antenne (2) comprend au moins deux zones de raccordement, dans lequel est déterminée une troisième zone d'image (AB1) dans laquelle une première zone de raccordement est reproduite, dans lequel est déterminée une quatrième zone d'image (AB2) dans laquelle une seconde zone de raccordement est reproduite, dans lequel une position et/ou une orientation à base d'image de la structure d'antenne (2) est déterminée en fonction de la position de la troisième zone d'image (AB1) et de la quatrième zone d'image (AB2), dans lequel la position et/ou l'orientation relatives de la structure d'antenne (2) par rapport au composant électronique (3) est déterminée en fonction de la position et/ou de l'orientation à base d'image de la structure d'antenne (2).

4. Procédé selon l'une quelconque des revendications 2 à 3, **caractérisé en ce que** des points centraux (M1, M2) des zones d'image (KS1, KS2) dans lesquelles les points de contact sont reproduits, et/ou des points centraux (M3, M4) des zones d'image (AB1, AB2) dans lesquelles les zones de raccordement sont reproduites, sont déterminés, dans lequel la position et/ou l'orientation relatives de la structure d'antenne (2) par rapport au composant électronique (3) est déterminée sur la base d'une image en fonction des points centraux (M1, M2, M3, M4) déterminés.

5. Procédé selon l'une quelconque des revendications 1 à 4, **caractérisé en ce que** l'image radioscopique (DB) est générée de manière telle qu'au moins une structure de référence avec des propriétés géométriques préconnues est reproduite en plus, dans lequel un rapport entre des propriétés géométriques basées sur des pixels et des propriétés géométriques réelles est déterminé en fonction des propriétés préconnues, dans lequel une position et/ou une orientation relatives réelles de la structure d'antenne (2) par rapport au composant électronique (3) est déterminée en fonction du rapport.

6. Procédé selon la revendication 5, **caractérisé en ce que** la structure de référence est formée par les deux points de contact du composant électronique (3).

7. Procédé selon l'une quelconque des revendications 1 à 6, **caractérisé en ce qu'**est déterminée en plus une zone d'image (KF) dans laquelle une surface de matière adhésive est reproduite, dans lequel la matière adhésive relie la structure d'antenne (2) et le composant électronique (3), dans lequel au moins une dimension (D), à base d'image, de la surface de matière adhésive et/ou une position et/ou une orientation relatives de la surface de matière adhésive par rapport au composant électronique (3) est déterminée, dans lequel un critère de qualité dépendant de la dimension et/ou de la position et/ou de l'orientation est évalué.

8. Procédé selon l'une quelconque des revendications 1 à 7, **caractérisé en ce que** le procédé comporte les étapes de procédé suivantes :
- le dépôt d'un premier composant électronique (3) sur un premier corps porteur (1, 1a) en fonction d'au moins un paramètre de dépôt spécifique au composant,
- la fourniture d'un autre corps porteur,
- le dépôt d'une autre structure d'antenne sur l'autre corps porteur,
- le dépôt d'un autre composant électronique sur l'autre corps porteur en fonction d'au moins un paramètre de dépôt spécifique au composant, dans lequel le paramètre de dépôt spécifique au composant est déterminé en fonction de la position et/ou de l'orientation relatives d'une première structure d'antenne (2) sur le premier corps porteur (1, 1a) par rapport à un premier composant électronique (3) sur le premier corps porteur (1, 1a).

9. Procédé selon la revendication 8, **caractérisé en ce que** sur le premier corps porteur (1, 1a) est déposée en plus une matière adhésive en fonction d'un paramètre de dépôt spécifique à la matière adhésive, dans lequel est déterminée en plus une zone d'image (KF) dans laquelle une première surface de matière adhésive est reproduite, dans lequel la matière adhésive relie la première structure d'antenne (2) et le premier composant électronique (3), dans lequel au moins une dimension (D), à base d'image, de la première surface de matière adhésive et/ou une position et/ou une orientation relatives de la première surface de matière adhésive par rapport au premier composant électronique (3) est déterminée,
dans lequel sur l'autre corps porteur est déposée en plus une matière adhésive en fonction de l'au moins un paramètre de dépôt spécifique à la matière adhésive, dans lequel le paramètre de dépôt spécifique à la matière adhésive est déterminé en fonction de la dimension (D) de la première surface de matière adhésive et/ou de la position et/ou de l'orientation relatives de la première surface de matière adhésive par rapport au premier composant électronique (3).

10. Système de fabrication d'un document de valeur et/ou de sécurité avec un dispositif de transmission de données, comportant un dispositif de dépôt, un dispositif de montage de composants (43), un dispositif de radioscopie et au moins un dispositif d'évaluation (46), dans lequel le dispositif de transmission de données comporte au moins une structure d'antenne (2) et au moins un composant électronique (3), dans lequel, au moyen du dispositif de dépôt, une structure d'antenne (2) peut être déposée sur un corps porteur (1, 1a, 1b, 1e, 1d), dans lequel, au moyen du dispositif de montage de composant (43), un composant électronique (3) peut être déposé sur le corps porteur (1, 1a, 1b, 1e, 1d), dans lequel, au moyen du dispositif de radioscopie, une image radioscopique (DB) d'une zone du dispositif de transmission de données, dans laquelle au moins une portion de la structure d'antenne (2) et le composant électronique (3) sont disposés au moins en partie, peut être générée, dans lequel, au moyen du dispositif d'évaluation (46), au moins une zone d'image dans laquelle l'au moins une portion de la structure d'antenne (2) ou une partie de la portion est reproduite, et au moins une zone d'image, dans laquelle le composant électronique (3) ou une partie du composant électronique (3) est reproduit, peuvent être déterminées, dans lequel une position et/ou une orientation relatives de la structure d'antenne (2) par rapport au composant électronique (3) peut être déterminée sur la base d'une image, dans lequel la détermination, à base d'image, de la position et/ou de l'orientation relatives désigne une détermination de la position et/ou de l'orientation relatives dans un système de coordonnées d'image, dans lequel un critère de qualité dépendant de la position et/ou de l'orientation peut être évalué.
